# EUROPEAN PATENT APPLICATION

(11) **EP 4 693 012 A1**
(43) Date of publication of application: **11.02.2026**
(21) Application number: 24807328.0
(22) Date of filing: 15.03.2024
(51) Int. Cl.: G06F 3/04883, G06F 3/0481, G06F 3/041, G06F 3/04842

(54) **ELECTRONIC DEVICE FOR ADJUSTING RATIO OF HANDWRITING INPUT, OPERATING METHOD THEREOF, AND RECORDING MEDIUM**

(30) Priority: 12.05.2023 KR 20230062000; 13.06.2023 KR 20230075818
(71) Applicant: Samsung Electronics Co., Ltd., Suwon-si, Gyeonggi-do 16677 (KR)
(72) Inventor: KWAK, Taewon, Suwon-si Gyeonggi-do 16677 (KR); KIM, Dohyeon, Suwon-si Gyeonggi-do 16677 (KR); KIM, Jihoon, Suwon-si Gyeonggi-do 16677 (KR); PARK, Jeongwan, Suwon-si Gyeonggi-do 16677 (KR); SHIN, Jinsu, Suwon-si Gyeonggi-do 16677 (KR); LEE, Donghyuk, Suwon-si Gyeonggi-do 16677 (KR)
(74) Representative: Gulde & Partner
(86) International application number: PCT/KR2024/003274
(87) International publication number: WO 2024/237447

(57) **Abstract**

According to an embodiment, an electronic device may comprise a display, a processor, and a memory for storing instructions, wherein the instructions that, when executed by the processor, cause the electronic device to: display, on the display, a first screen in which a height-to-width ratio corresponds to a first ratio, wherein the first screen includes at least one handwriting input of a first type and at least one handwriting input of a second type; identify a command for changing the height-to-width ratio of the first screen from the first ratio to a second ratio; and based on the command, display a second screen obtained by changing the width-to-height ratio of the first screen to the second ratio, wherein the width-to-height ratio of the at least one handwriting input of the first type included in the second screen is maintained such that the width-to-height ratio of the at least one handwriting input of the first type included in the second screen is same as the width-to-height ratio of the at least one handwriting input of the first type included in the first screen, and the width-to-height ratio of the at least one handwriting input of the second type included in the second screen is changed based on the second ratio.

## Description

### [Technical Field]

Embodiments of the disclosure relate to an electronic device configured to adjust the ratio of handwriting inputs, a method for operating the same, and a recording medium.

### [Background Art]

User equipment such as smartphones, tablets, and wearable devices may provide various functions, including a music playback function, a navigation function, a short-range wireless communication (e.g., Bluetooth, Wi-Fi, or near field communication (NFC)) function, a fingerprint recognition function, a photograph (still image) capture or moving image capture (recording) function, and an electronic payment function.

Some user equipment may recognize a handwriting input using a part of the user's body or an electronic pen. For example, an electronic device may include an input device that detects the approach and contact of a user's body part or an electronic pen, thereby recognizing a handwriting input received through the input device from the user's body part or the electronic pen.

The electronic device may display a screen including the handwriting input through a display. Upon switching from a landscape mode to a portrait mode, the electronic device may display a screen with a changed ratio through the display.

### [Detailed Description of the Invention]

### [Technical Solution]

An electronic device according to an embodiment may include a display, a processor, and memory storing instructions.

In connection with the electronic device according to an embodiment, the instructions, when executed by the processor, may cause the electronic device to display a first screen, the width-to-height ratio of which corresponds to a first ratio, on the display.

In connection with the electronic device according to an embodiment, the first screen may include at least one handwriting input of a first type and at least one handwriting input of a second type.

In connection with the electronic device according to an embodiment, the instructions, when executed by the processor, may cause the electronic device to identify a command for changing the width-to-height ratio of the first screen from the first ratio to a second ratio.

In connection with the electronic device according to an embodiment, the instructions, when executed by the processor, may cause the electronic device to display a second screen obtained by changing the width-to-height ratio of the first screen to the second ratio, based on the command.

In connection with the electronic device according to an embodiment, the width-to-height ratio of the at least one handwriting input of the first type included in the second screen may be maintained such that the width-to-height ratio of the at least one handwriting input of the first type included in the second screen is same as the width-to-height ratio of the at least one handwriting input of the first type included in the first screen.

In connection with the electronic device according to an embodiment, the width-to-height ratio of the at least one handwriting input of the second type included in the second screen may be changed based on the second ratio.

A method for operating an electronic device according to an embodiment may include displaying a first screen, the width-to-height ratio of which corresponds to a first ratio, on a display included in the electronic device.

In connection with the method for operating an electronic device according to an embodiment, the first screen may include at least one handwriting input of a first type and at least one handwriting input of a second type.

The method for operating an electronic device according to an embodiment may include identifying a command for changing the width-to-height ratio of the first screen from the first ratio to a second ratio.

The method for operating an electronic device according to an embodiment may include displaying a second screen obtained by changing the width-to-height ratio of the first screen to the second ratio, based on the command.

In connection with the method for operating an electronic device according to an embodiment, the width-to-height ratio of the at least one handwriting input of the first type included in the second screen may be maintained such that the width-to-height ratio of the at least one handwriting input of the first type included in the second screen is same as the width-to-height ratio of the at least one handwriting input of the first type included in the first screen.

In connection with the method for operating an electronic device according to an embodiment, the width-to-height ratio of the at least one handwriting input of the second type included in the second screen may be changed based on the second ratio.

A non-transitory recording medium according to an embodiment may store at least one instruction which may execute displaying a first screen, the width-to-height ratio of which corresponds to a first ratio, on a display included in the electronic device.

In connection with the non-transitory recording medium, the first screen may include at least one handwriting input of a first type and at least one handwriting input of a second type.

The non-transitory recording medium may store at least one instruction which may execute an operation of identifying a command to change the width-to-height ratio of the first screen from the first ratio to a second ratio.

The non-transitory recording medium may store at least one instruction which may execute an operation of displaying a second screen obtained by changing the width-to-height ratio of the first screen to the second ratio, based on the command.

In connection with the non-transitory recording medium, the width-to-height ratio of the at least one handwriting input of the first type included in the second screen may be maintained such that the width-to-height ratio of the at least one handwriting input of the first type included in the second screen is same as the width-to-height ratio of the at least one handwriting input of the first type included in the first screen.

In connection with the non-transitory recording medium, the width-to-height ratio of the at least one handwriting input of the second type included in the second screen may be changed based on the second ratio.

### [Brief Description of Drawings]

FIG. 1 is a block diagram of an electronic device in a network environment according to various networks.
FIG. 2A is a diagram illustrating an electronic device according to an embodiment displaying a first screen including multiple handwriting inputs, the width-to-height ratio of the first screen being a first ratio.
FIG. 2B is a diagram illustrating a conventional electronic device according to a comparative example displaying a second screen including multiple handwriting inputs in case that the width-to-height ratio is changed to a second ratio.
FIG. 2C is a diagram illustrating electronic device according to an embodiment displaying a second screen including multiple handwriting inputs in case that the width-to-height ratio of the electronic device is changed to a second ratio.
FIG. 3 is a schematic block diagram of an electronic device according to an embodiment.
FIG. 4 is a flowchart illustrating operations of adjusting the ratio of handwriting inputs displayed on a display by an electronic device according to an embodiment.
FIG. 5 is a flowchart for describing operations of determining whether to group at least one handwriting input by an electronic device according to an embodiment.
FIG. 6 is a flowchart for describing operations of determining whether to group at least one handwriting input of a first type and arranging the handwriting input by an electronic device according to an embodiment.
FIG. 7A is a flowchart for describing operations of determining whether to perform grouping according to whether the first handwriting input and the second handwriting input of a first type are located in the same area among multiple divided areas by an electronic device according to an embodiment.
FIG. 7B is a flowchart for describing operations of determining whether to perform grouping according to whether the first handwriting input and the second handwriting input of a first type are located on the same line by an electronic device according to an embodiment.
FIG. 8 is a flowchart for describing operations of determining whether to group at least one handwriting input of a first type by an electronic device according to an embodiment.
FIG. 9 is a flowchart for describing operations of adjusting the width-to-height ratio of a first handwriting input of a first type and a second handwriting input, in case that at least a part of the first handwriting input overlaps with at least a part of the second handwriting input, by an electronic device according to an embodiment.
FIG. 10A is a diagram for describing operations of identifying the distance between multiple strokes included in at least one handwriting input of a first type by an electronic device according to an embodiment.
FIG. 10B is a diagram for describing operations of identifying the distance between strokes of at least one handwriting input representing a word by an electronic device according to an embodiment.
FIG. 10C is a diagram for describing operations of determining whether to group at least one handwriting input, based on the distance between multiple strokes, by an electronic device according to an embodiment.
FIG. 11A is a diagram illustrating a first screen displayed on a display in case that an electronic device according to an embodiment is in a portrait mode.
FIG. 11B is a diagram illustrating a second screen displayed on a display in case that a conventional electronic device according to a comparative example switches from a portrait mode to a landscape mode.
FIG. 12A is a diagram for describing operations of grouping multiple handwriting inputs included in a first screen in case that an electronic device according to an embodiment is in a portrait mode.
FIG. 12B is a diagram for describing operations of adjusting the width-to-height ratio of multiple handwriting inputs included in a first screen in case that an electronic device according to an embodiment has switched from a portrait mode to a landscape mode.
FIG. 13A and FIG. 13B are diagrams for describing operations of adjusting the ratio of at least one handwriting input of a second type included in a first screen in case that an electronic device according to an embodiment has switched from a portrait mode to a landscape mode.
FIG. 14A is a diagram for describing operations in which an electronic device according to an embodiment displays a screen related to a calendar through a display.
FIG. 14B is a diagram for describing operations in which an electronic device according to an embodiment displays a calendar-related screen through a display.

### [Mode for Carrying out the Invention]

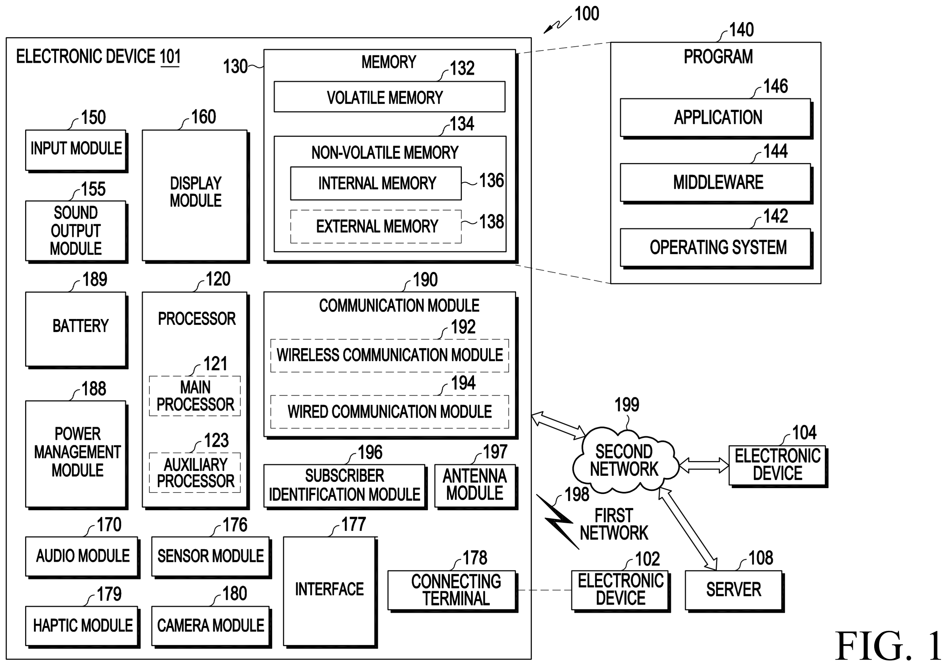

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

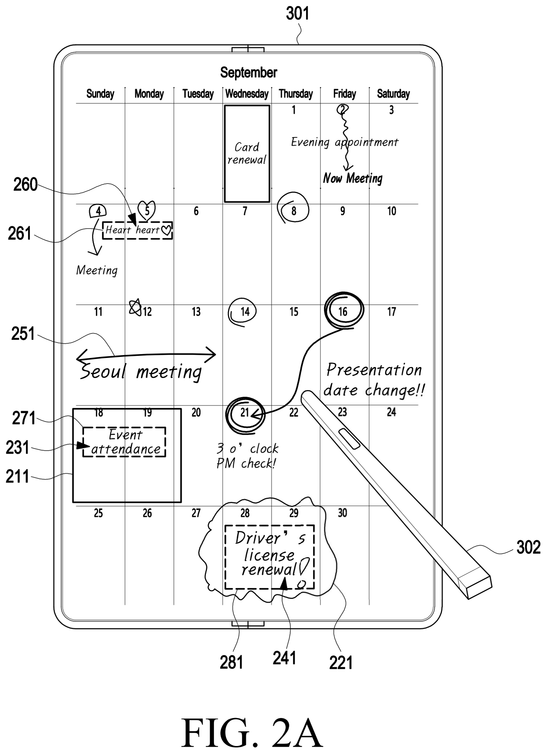

FIG. 2A is a diagram illustrating an electronic device according to an embodiment displaying a first screen including multiple handwriting inputs, the width-to-height ratio of the first screen being a first ratio.

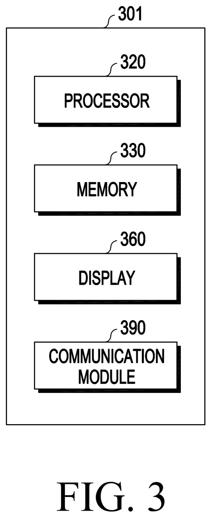

Referring to FIG. 2A, according to an embodiment, the electronic device 301 (e.g., the electronic device 301 of FIG. 3) may display, on the display 360 (e.g., the display 360 of FIG. 3), a first screen including multiple handwriting inputs, the width-to-height ratio of the first screen being a first ratio (e.g., a ratio of 18:22). According to an embodiment, the electronic device 301 may be implemented as a foldable device or a slidable device. However, this is merely an example, and the electronic device 301 may be implemented as various devices. For example, the first ratio may be determined based on the width-to-height ratio of the display 360. Alternatively, the first ratio may be determined based on a user's setting among the width-to-height ratios supported by the display 360. The first screen may refer to a screen that includes handwriting inputs (e.g., handwriting inputs by the user's finger or a stylus pen 302). For example, the first screen may be a screen related to a calendar divided into multiple areas. For example, the first screen may refer to a screen in the portrait mode of the electronic device 301. The multiple handwriting inputs may include multiple texts (e.g., meeting, heart heart, Seoul meeting, presentation date change, driver's license renewal, event attendance), special characters (e.g., heart, star, exclamation mark), objects (e.g., 251) (e.g., arrows) displayed over one area and at least a part of other areas adjacent to that one area, and objects (e.g., 211, 221) surrounding the multiple texts (e.g., objects surrounding the texts regarding card renewal, event attendance, driver's license renewal).

According to an embodiment, the electronic device 301 may identify a command to change the width-to-height ratio of the first screen from a first ratio to a second ratio (e.g., a 22:18 ratio). For example, the electronic device 301 may identify a command to switch from the portrait mode to the landscape mode according to the rotation of the electronic device 301. For example, in case that the electronic device 301 is implemented as a foldable device, the same may identify a command for the display 360 to be folded. For example, in case that the electronic device 301 is implemented as a slidable device, the same may identify a command to extend the display 360 according to the degree of sliding. For example, the electronic device 301 may identify a command to display in multi-window mode.

According to an embodiment, the electronic device 301 may display a second screen with the width-to-height ratio changed to a second ratio (e.g., a 22:18 ratio), based on the command. For example, the second ratio may be determined based on the width-to-height ratio of the display 360 changed according to the rotation of the electronic device 301. Alternatively, the second ratio may be determined based on the user's setting among the width-to-height ratios supported by the display 360. Hereinafter, with regard to a method of displaying multiple handwriting inputs included in the first screen on the second screen, an embodiment of the disclosure and a comparative example will be compared.

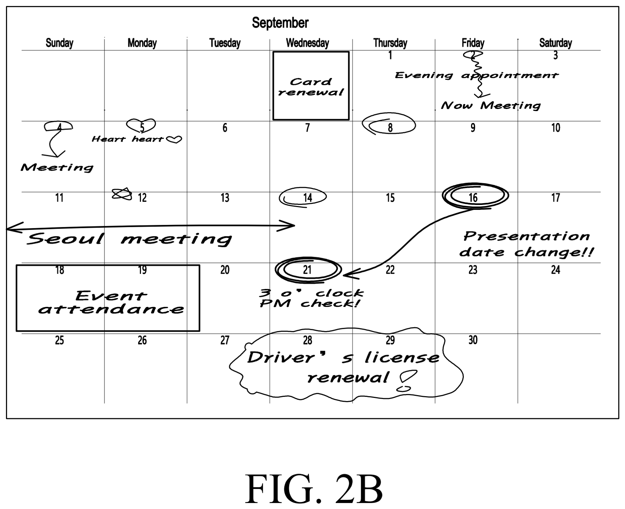

FIG. 2B is a diagram illustrating a conventional electronic device according to a comparative example displaying a second screen including multiple handwriting inputs in case that the width-to-height ratio is changed to a second ratio.

Referring to FIG. 2B, the electronic device according to the comparative example may identify the width-to-height ratio (e.g., the second ratio) of the second screen to be displayed on the display, based on a command to switch from the portrait mode to the landscape mode according to the rotation of the electronic device. For example, the second ratio may be determined based on the width-to-height ratio of the display changed according to the rotation of the electronic device. Alternatively, the second ratio may be determined based on the user's setting among the width-to-height ratios supported by the display. For example, the electronic device according to the comparative example may display the second screen by adjusting the ratio of elements (e.g., handwriting inputs, objects, divided areas) included in the first screen. For example, the elements included in the second screen may have the horizontal length increased by a designated ratio.

The electronic device according to the comparative example may identify the coordinates of multiple handwriting inputs included in the first screen.

The electronic device according to the comparative example may determine the coordinates of multiple handwriting inputs to be displayed on the second screen, based on the coordinates of multiple handwriting inputs included in the first screen and the second ratio.

The electronic device according to the comparative example may display a second screen including multiple handwriting inputs on the display. The multiple handwriting inputs may be displayed in positions based on the determined coordinates, with the width-to-height ratio changed to the second ratio.

The multiple handwriting inputs included in the second screen according to the comparative example may be displayed in a horizontally stretched shape.

For example, an arrow object displayed between the area with the date 11 and the area with the date 13 in the portrait mode may be displayed as located between the area with the date 11 and the area with the date 13 in the landscape mode. For example, texts displayed in the portrait mode (e.g., Seoul meeting, presentation date change, etc.) may be displayed in a horizontally stretched shape in the landscape mode. According to the comparative example, the multiple handwriting inputs displayed on the second screen may have the ratio and size automatically adjusted without considering the accuracy or readability of the text. As a result, the multiple handwriting inputs included in the second screen can be displayed with reduced accuracy, readability, and aesthetic quality.

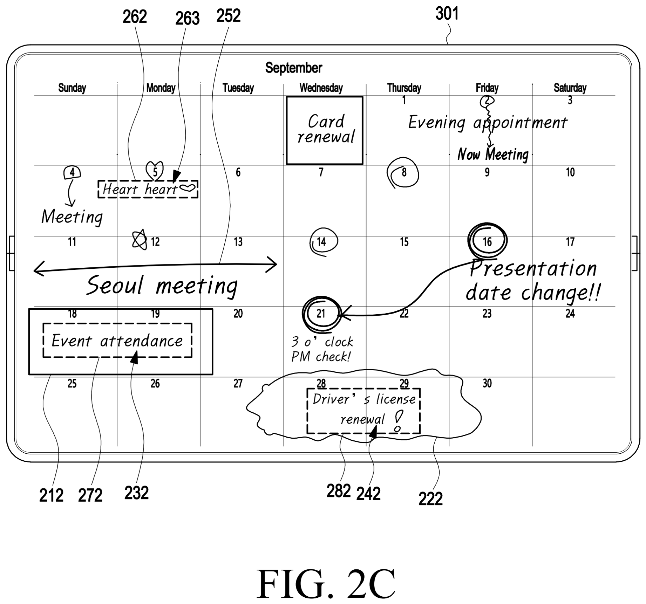

FIG. 2C is a diagram illustrating electronic device according to an embodiment displaying a second screen including multiple handwriting inputs in case that the width-to-height ratio of the electronic device is changed to a second ratio.

Referring to FIG. 2C, according to an embodiment, the electronic device 301 (e.g., the electronic device 301 of FIG. 3) may display the second screen by adjusting the ratio of elements (e.g., handwriting inputs, objects, divided areas) included in the first screen. For example, the electronic device 301 may display the second screen by adjusting the ratio of elements (e.g., handwriting inputs, objects, divided areas) included in the first screen. The electronic device 301 may maintain the ratio of specific elements (e.g., specific types of handwriting inputs among the handwriting inputs) included in the first screen. Alternatively, the electronic device 301 may adjust the horizontal length (and vertical length) of specific elements (e.g., specific types of handwriting inputs among the handwriting inputs) included in the first screen, based on a separately designated ratio.

According to an embodiment, the first screen can include multiple handwriting inputs. For example, the multiple handwriting inputs can include a first type of handwriting input and a second type of handwriting input. For example, the first type of handwriting input may include texts and special characters (e.g., heart, star, exclamation mark), and the second type of handwriting input may include objects (e.g., 211, 221) surrounding multiple texts and objects (e.g., 251) (e.g., arrows) displayed over one area and at least a part of other areas adjacent to that one area. Depending on the implementation, the electronic device 301 may determine the multiple texts (e.g., 231, 241) as the second type of handwriting input in case that the multiple texts (e.g., 231, 241) are inseparable from the objects (e.g., 211, 221) surrounding the multiple texts (e.g., 231, 241). For example, in case that the handwriting input corresponding to objects surrounding multiple texts overlaps with the handwriting input corresponding to the multiple texts surrounded by the objects, the electronic device 301 may determine that the multiple texts are inseparable from the objects surrounding the multiple texts. For example, the electronic device 301 may identify that the multiple texts (e.g., 231, 241) are separable from the objects (e.g., 211, 221) surrounding the multiple texts (e.g., 231, 241) as a result of identifying that the handwriting input corresponding to the multiple texts (e.g., 231, 241) does not overlap with the objects (e.g., 211, 221) surrounding the multiple texts (e.g., 231, 241). The electronic device 301 may determine the multiple texts (e.g., 231, 241) as the first type of handwriting input. However, this is merely an example, and the first type of handwriting input and the second type of handwriting input in the embodiments of the in disclosure are not limited to the above example.

According to an embodiment, the electronic device 301 may identify whether multiple handwriting inputs included in the first screen are of the first type of handwriting input or the second type of handwriting input. For example, the electronic device 301 may identify whether multiple handwriting inputs included in the first screen are of the first type of handwriting input or the second type of handwriting input by using a pre-trained artificial intelligence (AI) model.

According to an embodiment, the electronic device 301 may determine whether to group multiple handwriting inputs of the first type by considering the distance between the multiple strokes included in the multiple handwriting inputs of the first type, whether the multiple handwriting inputs of the first type are located in the same area among multiple divided areas, and/or whether the multiple handwriting inputs of the first type are located on the same line. For example, the electronic device 301 may distinguish (or designate) the multiple handwriting inputs of the first type with regard to each group. The electronic device 301 may determine the arrangement (or position) of the handwriting inputs or adjust the size (or ratio) according to the distinguished group.

According to an embodiment, the electronic device 301 may determine the position, arrangement, or size of the multiple handwriting inputs of the first type to be displayed on the second screen with regard to each determined group. According to an embodiment, the electronic device 301 may identify the area corresponding to the determined group. The area corresponding to the determined group may refer to the area configured by the multiple handwriting inputs included in that group. For example, the area corresponding to the determined group may refer to the area configured by the multiple strokes included in that group. For example, in case of switching from the portrait mode to the landscape mode due to the rotation of the electronic device 301, the electronic device 301 may adjust the position, arrangement, or size of the area corresponding to each of the determined groups. Based on the adjustment of the position, arrangement, or size of the area corresponding to each of the determined groups, the position, arrangement, or size of the multiple handwriting inputs included in that area may be adjusted uniformly. The electronic device 301 may display the second screen by maintaining the width-to-height ratio of each of the multiple handwriting inputs the same as the ratio of each of the multiple handwriting inputs displayed on the first screen. For example, the electronic device 301 may maintain the width-to-height ratio of each of the first-type texts 232, 242, and 263 included in the second screen the same as the width-to-height ratio of each of the first-type texts 231, 241, and 260 included in the first screen.

According to an embodiment, the second screen may include objects (e.g., 252) (e.g., arrow) displayed over one area of the second type with the width-to-height ratio changed based on the second ratio, and at least a part of other areas adjacent to that one area.

According to an embodiment, the electronic device 301 may identify the coordinates of the center point of the areas 271, 281, and 261 corresponding to the groups of multiple handwriting inputs 231, 241, and 260 of the first type on the first screen. According to an embodiment, the electronic device 301 may determine the coordinates of the center point of the areas 272, 282, and 262 corresponding to the groups of multiple handwriting inputs 232, 242, and 263 of the first type on the second screen, based on the aforementioned coordinates. According to an embodiment, the electronic device 301 may adjust the position or arrangement of the multiple handwriting inputs of the first type to be displayed on the second screen, based on the determined coordinates. For example, the electronic device 301 may identify that the coordinate of the center point of the area 261 corresponding to the first-type handwriting input (e.g., heart heart) 260 included in the first screen is 100 in the x-axis direction (e.g., horizontal direction), and is 250 in the y-axis direction (e.g., vertical direction). For example, the electronic device 301 may determine that the coordinate of the center point of the area 262 corresponding to the first-type handwriting input (e.g., heart heart) (263) to be displayed on the second screen is 122 in the x-axis direction (e.g., horizontal direction), and is 204 in the y-axis direction (e.g., vertical direction), and may adjust the position or arrangement of the area 262 corresponding to the first-type handwriting input, based on the determined coordinates.

According to an embodiment, the electronic device 301 may determine the positions of the multiple handwriting inputs of the second type on the second screen, based on the positions of the multiple handwriting inputs of the second type included in the first screen and the second ratio. According to an embodiment, the electronic device 301 may display the second screen with the multiple handwriting inputs of the second type, the width-to-height ratio of which changed based on the second ratio, placed in the determined positions.

Accordingly, the electronic device 301 may not uniformly adjust the size or ratio of the first-type handwriting inputs (e.g., texts) among the multiple handwriting inputs displayed on the second screen. As a result, the multiple handwriting inputs included in the second screen may be displayed with accuracy, readability, and aesthetic quality maintained even when the screen ratio is changed. Additionally, the multiple handwriting inputs displayed on the second screen may be displayed in accordance with the user's intent even when the screen ratio is changed.

FIG. 3 is a schematic block diagram of an electronic device according to an embodiment.

Referring to FIG. 3, according to an embodiment, the electronic device 301 may include a processor 320, memory 330, a display 360, and a communication module 390. The electronic device 301 may be implemented identical or similar to the electronic device 101 of FIG. 1.

According to an embodiment, the processor 320 may display a first screen on the display 360 (e.g., the display module 160 of FIG. 1), the width-to-height ratio of the first screen corresponding to a first ratio. For example, the display 360 may be implemented as a touchscreen. The first screen may refer to a screen including handwriting inputs (e.g., handwriting inputs by the user's finger or a stylus pen). For example, the first screen may include a screen divided into multiple areas. For example, the first screen may include a screen related to a calendar including a date. The processor 320 may identify areas displaying multiple dates on the screen related to the calendar as multiple areas.

According to an embodiment, the first screen may include at least one handwriting input of a first type and at least one handwriting input of a second type. According to an embodiment, the at least one handwriting input of the first type may include text. The text may include Korean characters, English letters, and numbers. Depending on the implementation, the at least one handwriting input of the first type may also include a handwriting input that is not text. For example, the at least one handwriting input of the first type may further include a handwriting input representing an object displayed over a date of the calendar. For example, the object displayed over the date of the calendar may include various shapes such as a circle shape, a triangle shape, a square shape, or a check shape. For example, depending on the implementation, the at least one handwriting input of the first type may further include a handwriting input representing a special character. For example, the handwriting input representing the special character may include various shapes such as a heart shape, a star shape, a diamond shape, an exclamation mark, or a question mark.

According to an embodiment, the at least one handwriting input of the second type may include handwriting inputs (e.g., shapes, line segments) representing non-text objects not included in the first type. In addition, the at least one handwriting input of the second type may include a handwriting input representing an object displayed over at least a part of a first area included in multiple areas and over at least a part of a second area adjacent to the first area. For example, the object displayed over at least a part of the first area and over at least a part of the second area adjacent to the first area may include a handwriting input representing an arrow shape. Depending on the implementation, in case that a text is surrounded by a non-text object, the processor 320 may identify whether the text is separable from the non-text object. In case that the text and the non-text object do not overlap, the processor 320 may identify that the text is separable from the non-text object. In case that a text is surrounded by a non-text object, and in case that the text surrounded by the object is deemed to be inseparable from the object, the processor 320 may determine that the text surrounded by the object and the object are handwriting inputs of the second type. Upon identifying that the text surrounded by the object is separable from the object, the processor 320 may determine that the text surrounded by the object is a handwriting input of the first type, and may determine that the object is a handwriting input of the second type.

According to an embodiment, the processor 320 may identify a command to change the width-to-height ratio of the first screen from a first ratio to a second ratio. According to an embodiment, the processor 320 may display a second screen on the display 360, the width-to-height ratio thereof being changed to the second ratio, based on the command. For example, the processor 320 may identify the command in case that the electronic device 301 changes from a landscape mode to a portrait mode or from a portrait mode to a landscape mode according to a rotation of the electronic device 301. Alternatively, upon receiving information regarding a screen including a handwriting input from an external electronic device through the communication module 390, the processor 320 may identify the command in connection with displaying the screen. For example, in case that the width-to-height ratio of the display of the external electronic device differs from the display 360 of the electronic device 301, the processor 320 may identify a command to change the width-to-height ratio of the screen to match the display 360.

According to an embodiment, the processor 320 may identify, based on the command, whether multiple handwriting inputs included in the first screen are of the first type or the second type. For example, the processor 320 may use a pre-trained artificial intelligence (AI) model to identify whether at least one handwriting input included in the first screen corresponds to the first type or the second type. For example, the pre-trained AI model may be stored in the memory 330. Alternatively, the processor 320 may access a server through the communication module 390 and may use an AI model stored in the server to determine whether at least one handwriting input included in the first screen corresponds to the first type or the second type.

According to an embodiment, upon identifying the at least one handwriting input of the first type, the processor 320 may identify the distance between multiple strokes included in the at least one handwriting input of the first type. A stroke may refer to a continuous mark from a point at which an input (e.g., a touch input) begins to a point at which the input (e.g., the touch input) is released. According to an embodiment, each of the strokes may include information regarding the input time, the order, and/or the coordinates. According to an embodiment, the processor 320 may identify the distance between starting points of the multiple strokes. According to an embodiment, the processor 320 may identify the distance between a first stroke input on the display 360 at the *n*^{th} instance and a second stroke input on the display 360 at the (*n*+1)^{th} instance. In this regard, *n* may denote a natural number. However, this is an example, and various embodiments of the disclosure may determine the distance in various methods.

According to an embodiment, the at least one handwriting input of the first type may include a first handwriting input and a second handwriting input. For example, the first handwriting input and the second handwriting input may refer to handwriting inputs distinguished on a word basis (or a syllable basis). For example, the first handwriting input may refer to a handwriting input entered on the display 360 at the *n*^{th} instance, and the second handwriting input may refer to a handwriting input entered on the display 360 at the (*n*+1)^{th} instance (*n* is a natural number). For example, the processor 320 may use an AI model to distinguish or identify the handwriting inputs on a word basis (or a syllable basis). For example, the processor 320 may distinguish or identify the handwriting inputs on a word basis, based on spacing (or spacing gap).

According to an embodiment, the processor 320 may determine the first distance between the last stroke of the first handwriting input and the first stroke of the second handwriting input. In addition, the processor 320 may identify, based on the first distance between the last stroke of the first handwriting input and the first stroke of the second handwriting input, whether the first handwriting input and the second handwriting input are included in the same line or the same area. For example, the processor 320 may identify the first distance between the starting point of the last stroke of the first handwriting input and the starting point of the first stroke of the second handwriting input. For example, the processor 320 may identify the first distance between the ending point of the last stroke of the first handwriting input and the starting point of the first stroke of the second handwriting input. However, this is an example, and embodiments of the disclosure may identify the first distance in various ways.

According to an embodiment, the processor 320 may compare the first distance between the first handwriting input and the second handwriting input with a designated distance. For example, the designated distance may refer to a distance used to determine whether to group handwriting inputs. The designated distance may be set by the processor 320 or set by the user. Depending on the implementation, according to an embodiment, the processor 320 may use an AI model to distinguish or identify handwriting inputs on a word basis (or a syllable basis). For example, the processor 320 may distinguish or identify handwriting inputs on a word basis, based on spacing (or spacing gap). For example, the processor 320 may use the AI model to identify handwriting inputs within the same sentence. The processor 320 may use the AI model to identify handwriting inputs on a sentence basis. According to an embodiment, upon identifying the first handwriting input and the second handwriting input as handwriting inputs within the same word, the processor 320 may determine the first handwriting input and the second handwriting input as the same group. According to an embodiment, upon identifying the first handwriting input and the second handwriting input as handwriting inputs within the same sentence, the processor 320 may determine the first handwriting input and the second handwriting input as the same group.

According to an embodiment, the processor 320 may determine whether to group at least one handwriting input, based on a comparison result. For example, upon identifying that the first distance is greater than a designated distance, the processor 320 may determine the first handwriting input as a first group and may determine the second handwriting input as a second group different from the first group. Upon identifying that the first distance is not greater than the designated distance, the processor 320 may determine the first handwriting input and the second handwriting input as the same group.

According to an embodiment, in case that the first handwriting input and the second handwriting input are determined to be in the same group, the processor 320 may adjust the arrangement, the position, the size, and/or the ratio of the first handwriting input and the second handwriting input to identical. Alternatively, in case that the first handwriting input and the second handwriting input are determined to be in different groups, the processor 320 may adjust the arrangement, the position, the size, and/or the ratio of the first handwriting input and the second handwriting input to be different.

According to an embodiment, the processor 320 may adjust the first distance by considering whether the first handwriting input and the second handwriting input are located within the same area among multiple areas included in the first screen or are located on the same line. According to an embodiment, the processor 320 may compare the adjusted distance with the designated distance to determine whether to group the first handwriting input and the second handwriting input. In addition, according to an embodiment, the processor 320 may adjust the first distance by considering whether the first handwriting input and the second handwriting input are located within the same area among multiple areas included in the first screen or are located on the same line only in case that the first distance exceeds the designated distance.

According to an embodiment, the processor 320 may identify whether the first handwriting input and the second handwriting input are located within the same area among multiple areas included in the first screen. According to an embodiment, upon identifying that the first handwriting input and the second handwriting input are located within the same area, the processor 320 may adjust the first distance to be shorter according to a designated first rule. For example, the designated first rule may refer to dividing the first distance by a designated value greater than 1. For example, the designated first rule may refer to subtracting a designated value from the first distance. However, this is an example, and embodiments of the disclosure may adjust the first distance to be shorter according to various rules.

According to an embodiment, upon identifying that the first handwriting input and the second handwriting input are not located within the same area, the processor 320 may adjust the first distance to be longer according to a designated second rule. For example, the designated second rule may refer to multiplying the first distance by a designated value greater than 1. For example, the designated second rule may refer to adding a designated value to the first distance. However, this is an example, and embodiments of the disclosure may adjust the first distance to be longer according to various rules.

According to an embodiment, the processor 320 may identify whether the first handwriting input and the second handwriting input are located on the same line. According to an embodiment, upon identifying that the first handwriting input and the second handwriting input are located on the same line, the processor 320 may adjust the first distance to be shorter according to a designated third rule. For example, the designated third rule may refer to dividing the first distance by a designated value greater than 1. For example, the designated third rule may refer to subtracting a designated value from the first distance. However, this is an example, and embodiments of the disclosure may adjust the first distance to be shorter according to various rules.

According to an embodiment, upon identifying that the first handwriting input and the second handwriting input are not located on the same line, the processor 320 may adjust the first distance to be longer according to a designated fourth rule. For example, the designated fourth rule may refer to multiplying the first distance by a designated value greater than 1. For example, the designated fourth rule may mean adding a designated value to the first distance. However, this is an example, and embodiments of the disclosure may adjust the first distance to be longer according to various rules. Alternatively, according to an embodiment, upon identifying that the first handwriting input and the second handwriting input are not located on the same line, the processor 320 may identify whether the first handwriting input and the second handwriting input are located within the same area among multiple areas included in the first screen.

According to an embodiment, the processor 320 may compare the distance adjusted by the aforementioned rules with a designated distance to determine the group of the first handwriting input and the second handwriting input. According to an embodiment, upon identifying that the adjusted distance is greater than the designated distance, the processor 320 may determine that the first handwriting input and the second handwriting input belong to different groups. According to an embodiment, upon identifying that the adjusted distance is not greater than the designated distance, the processor 320 may determine that the first handwriting input and the second handwriting input belong to the same group.

According to an embodiment, the designated values of the designated first rule, second rule, third rule, and fourth rule may be set to be identical to each other, all different, or partially identical.

According to an embodiment, the processor 320 may determine the arrangement, the position, and the size of at least one handwriting input to be displayed on the second screen with regard to each determined group. For example, in case that the electronic device 301 switches from a portrait mode to a landscape mode or from a landscape mode to a portrait mode, the processor 320 may adjust the position, the arrangement, the size, and the like with regard to areas corresponding to determined groups, respectively. An area corresponding to a determined group may refer to an area configured by at least one handwriting input included in that group. For example, an area corresponding to a determined group may refer to an area configured by multiple strokes included in the determined group. Based on the adjustment of the position, the arrangement, or the size of an area corresponding to each of the determined groups, the position, the arrangement, or the size of at least one handwriting input included in an area corresponding to each of the determined groups may be adjusted to be identical to each other. For example, the processor 320 may identify the coordinates of the center point of an area corresponding to a handwriting input of the first type on the first screen. The processor 320 may determine the coordinates of the center point of an area corresponding to the handwriting input of the first type on the second screen, based on the coordinates of the center point of the area corresponding to the handwriting input of the first type on the first screen. The processor 320 may display the handwriting input of the first type on the second screen, based on the coordinates of the center point of the handwriting input of the first type on the second screen.

According to an embodiment, in case that the width-to-height ratio of the first handwriting input of the first group and the width-to-height ratio of the second handwriting input of the second group, which are to be displayed on the second screen, are maintained identical to the width-to-height ratio of the first handwriting input on the first screen and the width-to-height ratio of the second handwriting input on the first screen, the processor 320 may identify whether at least a part of the first handwriting input and at least a part of the second handwriting input overlap.

According to an embodiment, in case that an area corresponding to the first group and an area corresponding to the second group overlap at least partially, the processor 320 may identify that at least a part of the first handwriting input and at least a part of the second handwriting input overlap. For example, an area corresponding to the first group may refer to an area configured by handwriting inputs included in the first group, and an area corresponding to the second group may refer to an area configured by handwriting inputs included in the second group.

According to an embodiment, upon identifying that at least a part of the first handwriting input and at least a part of the second handwriting input overlap, the processor 320 may change the width-to-height ratio of the first handwriting input and the second handwriting input to be displayed on the second screen, based on a second ratio. According to an embodiment, upon identifying that at least a part of the first handwriting input and at least a part of the second handwriting input do not overlap, the processor 320 may maintain the width-to-height ratio of the first handwriting input and the second handwriting input to be displayed on the second screen to be identical to the width-to-height ratio of the first handwriting input and the second handwriting input displayed on the first screen.

The operations of the electronic device 301 described in the following drawings may be performed by the processor 320. However, for convenience of description, the operations performed by the processor 320 will be described as being performed by the electronic device 301.

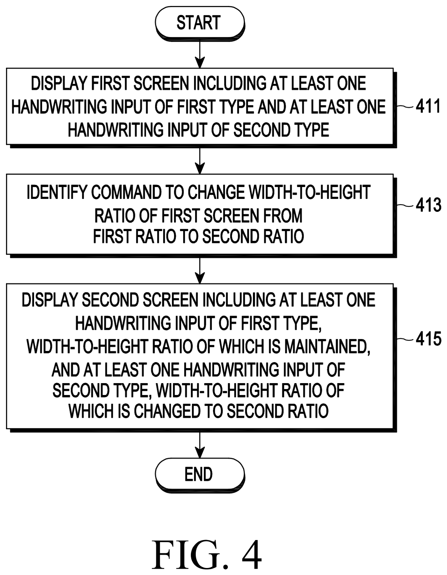

FIG. 4 is a flowchart illustrating operations of adjusting the ratio of handwriting inputs displayed on a display by an electronic device according to an embodiment.

Referring to FIG. 4, according to an embodiment, in operation 411, the electronic device 301 (e.g., the electronic device 301 of FIG. 3) may display a first screen including at least one handwriting input of a first type and at least one handwriting input of a second type on the display 360 (e.g., the display 360 of FIG. 3). The first screen may refer to a screen including handwriting inputs (e.g., handwriting inputs by the user's finger or a stylus pen). For example, the first screen may include a screen divided into multiple areas. The first screen may include a screen related to a calendar including a date.

According to an embodiment, in operation 413, the electronic device 301 may identify a command to change the width-to-height ratio of the first screen from a first ratio to a second ratio. For example, the electronic device 301 may identify the command in case that the electronic device 301 changes from a landscape mode to a portrait mode or from a portrait mode to a landscape mode according to a rotation of the electronic device 301. Alternatively, upon receiving information regarding a screen including a handwriting input from an external electronic device through the communication module 390 (e.g., the communication module 390 of FIG. 3), the processor 320 may identify the command in connection with displaying the screen. For example, in case that the width-to-height ratio of the display of the external electronic device differs from the display 360 of the electronic device 301, the electronic device 301, may identify a command to change the width-to-height ratio of the screen to match the display 360.

According to an embodiment, in operation 415, the electronic device 301 may, based on the command, display a second screen including at least one handwriting input of the first type, the width-to-height ratio of which is maintained, and at least one handwriting input of the second type, the width-to-height ratio of which is changed to the second ratio.

According to an embodiment, the at least one handwriting input of the first type may include text. Depending on the implementation, the at least one handwriting input of the first type may also include a non-text handwriting input. For example, the at least one handwriting input of the first type may further include a handwriting input representing an object displayed over a date of the calendar. For example, the object displayed over the date of the calendar may include various shapes such as a heart shape, a star shape, a circle shape, a triangle shape, a square shape, or a check shape. Depending on the implementation, the at least one handwriting input of the first type may further include a special character. For example, the special character may include various shapes such as a heart shape, a star shape, or an exclamation mark displayed around the text. However, this is an example, and various shapes and handwriting inputs may be included.

According to an embodiment, the at least one handwriting input of the second type may include handwriting inputs (e.g., shapes, line segments) representing non-text objects not included in the first type. In addition, the at least one handwriting input of the second type may include a handwriting input (e.g., a shape) surrounding the text. In addition, the at least one handwriting input of the second type may include a handwriting input representing an object displayed over at least a part of a first area included in multiple areas and over at least a part of a second area adjacent to the first area. For example, the object displayed over at least a part of the first area and over at least a part of the second area adjacent to the first area may include a handwriting input representing an arrow shape. Depending on the implementation, in case that a text is surrounded by a non-text object, and upon identifying that text surrounded by the object is inseparable from the object, the electronic device 301 may determine that the text surrounded by the object and the object are handwriting inputs of the second type. Upon identifying that text surrounded by the object is separable from the object, the electronic device 301 may determine that the text surrounded by the object is a handwriting input of the first type, and may determine that the object is a handwriting input of the second type.

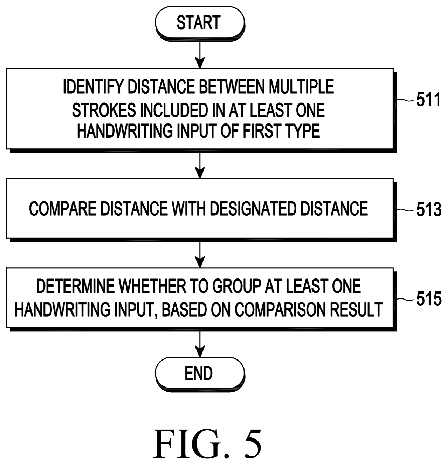

FIG. 5 is a flowchart for describing operations of determining whether to group at least one handwriting input by an electronic device according to an embodiment.

According to an embodiment, the electronic device 301 (e.g., the electronic device 301 of FIG. 3) may display a first screen including at least one handwriting input of a first type and at least one handwriting input of a second type on the display 360 (e.g., the display 360 of FIG. 3) at a first ratio. According to an embodiment, the electronic device 301 may identify a command to change the width-to-height ratio of the first screen to a second ratio.

According to an embodiment, the electronic device 301 may determine whether at least one handwriting input corresponds to the first type or the second type by using a trained artificial intelligence (AI) model.

Referring to FIG. 5, according to an embodiment, in operation 511, the electronic device 301 may identify the distance between multiple strokes included in the at least one handwriting input of the first type, based on the command. A stroke may refer to a continuous mark from a point at which an input (e.g., a touch input) begins to a point at which the input (e.g., the touch input) is released. For example, the electronic device 301 may identify the distance between a stroke input on the display 360 at the *n*^{th} instance and another stroke input on the display 360 at the (*n*+1)^{th} instance. In this regard, *n* denotes a natural number. For example, the electronic device 301 may identify the first distance between the starting point of the first stroke (e.g., the stroke input first on the display 360) and the starting point of the second stroke (e.g., the stroke input second on the display 360). For example, the electronic device 301 may also identify the first distance between the ending point of the first stroke and the starting point of the second stroke. However, this is merely an example, and various embodiments of the disclosure may determine distances in various methods.

According to an embodiment, in operation 513, the electronic device 301 may compare the distance between multiple strokes included in at least one handwriting input with a designated distance. For example, the designated distance may refer to a distance used to determine whether to group at least one handwriting input. The designated distance may be set by processor 320 or set by the user.

According to an embodiment, in operation 515, the electronic device 301 may determine whether to group at least one handwriting input, based on the comparison result. According to an embodiment, the electronic device 301 may determine that the handwriting inputs belong to different groups in case that the distance is greater than the designated distance. According to an embodiment, the electronic device 301 may may determine that the handwriting inputs belong to the same group in case that the distance is less than the designated distance. According to an embodiment, the electronic device 301 may determine the arrangement or position of at least one handwriting input with regard to each group.

According to an embodiment, the electronic device 301 may display a second screen including at least one handwriting input of the first type, based on the determined arrangement or position. The width-to-height ratio of the at least one handwriting input of the first type included in the second screen may be maintained identical to the width-to-height ratio of the first handwriting input included in the first screen.

For example, the electronic device 301 may identify an area corresponding to a first group and an area corresponding to a second group. The area corresponding to the first group may refer to the area configured by at least one handwriting input included in the first group, and the area corresponding to the second group may refer to the area configured by at least one handwriting input included in the second group. For example, in case of switching from a portrait mode to a landscape mode or from a landscape mode to a portrait mode according to a rotation of the electronic device 301, the electronic device 301 may adjust the position, arrangement, or size of the area corresponding to the first group and may adjust the position, arrangement, or size of the area corresponding to the second group. Based on the adjustment of the position, arrangement, or size of the area corresponding to the first group, the position, arrangement, or size of at least one handwriting input included in the area corresponding to the first group may be adjusted identical to each other. Based on the adjustment of the position, arrangement, or size of the area corresponding to the second group, the position, arrangement, or size of at least one handwriting input included in the area corresponding to the second group may be adjusted identical to each other.

Accordingly, even in case that the screen displayed on the display 360 switches from a landscape mode to a portrait mode or from a portrait mode to a landscape mode, the electronic device 301 according to an embodiment may maintain the same width-to-height ratio of the handwriting input of the first type, thereby improving the readability of the handwriting input of the first type.

The electronic device 301 according to an embodiment may accurately display the handwriting input of the first type by adjusting the position or arrangement of the handwriting input of the first type with regard to each group.

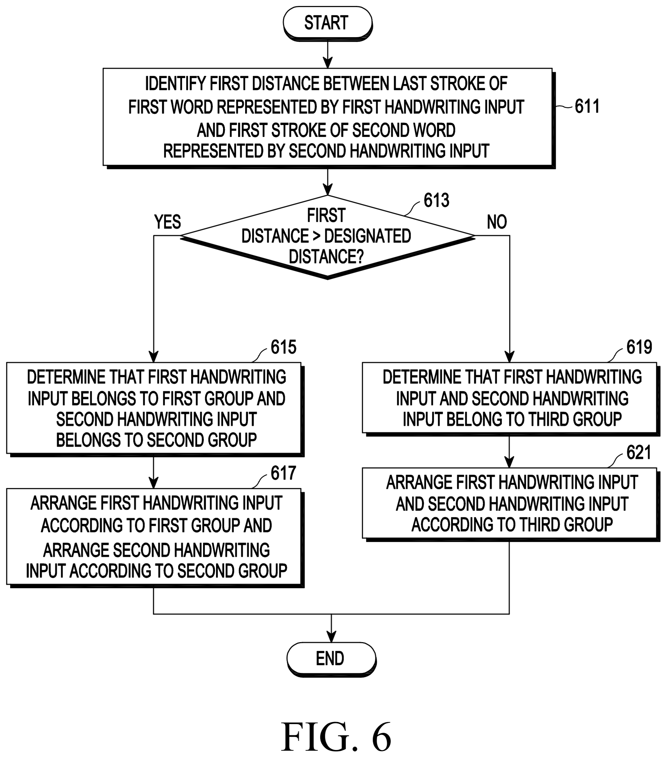

FIG. 6 is a flowchart for describing operations of determining whether to group at least one handwriting input of the first type and arranging the handwriting input by an electronic device according to an embodiment.

Referring to FIG. 6, according to an embodiment, in operation 611, the electronic device 301 (e.g., the electronic device 301 of FIG. 3) may identify the first distance between the last stroke of the first word represented by the first handwriting input and the first stroke of the second word represented by the second handwriting input, included in the first screen. According to an embodiment, the electronic device 301 may identify the first distance between the starting point of the last stroke of the first word and the starting point of the first stroke of the second word. The first handwriting input may refer to the handwriting input entered on the display 360 (e.g., the display 360 of FIG. 3) at the *n*^{th} instance, and the second handwriting input may refer to the handwriting input entered on the display 360 at the (*n*+1)^{th} instance. In this regard, n may denote a natural number. For example, the electronic device 301 may distinguish or identify handwriting inputs on a word basis, based on an AI model. For example, the electronic device 301 may distinguish or handwriting inputs a word basis, based on spacing (or spacing gap). However, this is merely an example, and various embodiments of the disclosure may determine the first distance in various methods.

According to an embodiment, in operation 613, the electronic device 301 may compare the first distance with a designated distance.

According to an embodiment, upon identifying that the first distance is greater than the designated distance (Yes in operation 613), the electronic device 301 may determine that the first handwriting input belongs to a first group, and the second handwriting input belongs to a second group different from the first group, in operation 615.

According to an embodiment, in operation 617, the electronic device 301 may arrange the first handwriting input according to the first group and may arrange the second handwriting input according to the second group, while maintaining the width-to-height ratio of the handwriting inputs. For example, the electronic device 301 may determine the arrangement or position to be displayed on the second screen. For example, the electronic device 301 may identify an area corresponding to the first group and an area corresponding to the second group. The area corresponding to the first group may refer to the area configured by the first handwriting input, and the area corresponding to the second group may refer to the area configured by the second handwriting input. For example, in case of switching from a portrait mode to a landscape mode or from a landscape mode to a portrait mode due to a rotation of the electronic device 301, the electronic device 301 may adjust the position, arrangement, or size of the area corresponding to the first group and may adjust the position, arrangement, or size of the area corresponding to the second group.

According to an embodiment, upon identifying that the first distance is not greater than the designated distance (No in operation 613), the electronic device 301 may determine that the first handwriting input and the second handwriting input belong to a third group, in operation 619.

According to an embodiment, in operation 621, the electronic device 301 may arrange the first handwriting input and the second handwriting input according to the third group. For example, the electronic device 301 may identify an area corresponding to the third group. The area may refer to the area configured by the first handwriting input and the second handwriting input. For example, in case of switching from a portrait mode to a landscape mode or from a landscape mode to a portrait mode due to a rotation of the electronic device 301, the electronic device 301 may adjust the position, arrangement, or size with regard to each area corresponding to the third group.

According to an embodiment, the electronic device 301 may display a second screen including the first handwriting input and the second handwriting input on the display 360, based on the determined arrangement or position. The width-to-height ratio of the first handwriting input included in the second screen may be maintained identical to the width-to-height ratio of the first handwriting input included in the first screen, and the width-to-height ratio of the second handwriting input included in the second screen may be maintained identical to the width-to-height ratio of the second handwriting input included in the first screen.

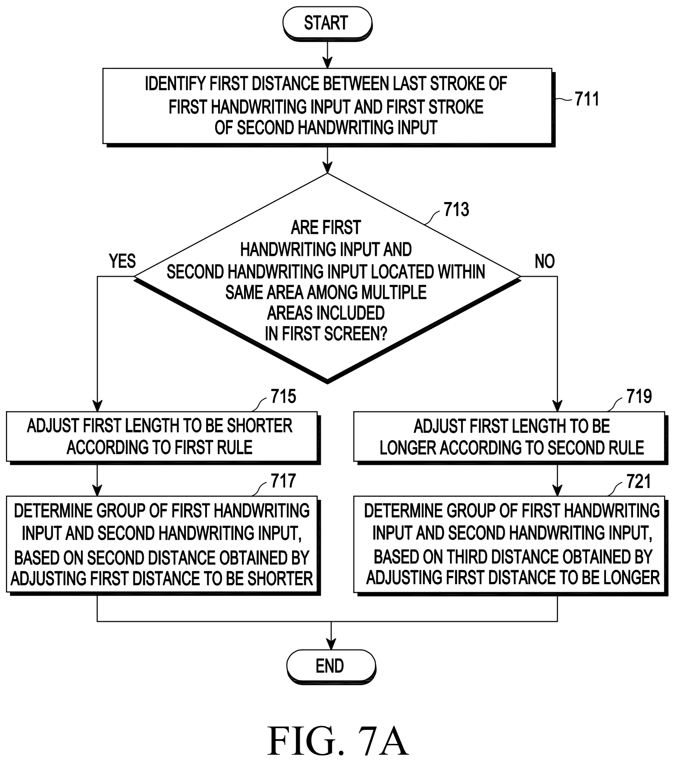

FIG. 7A is a flowchart for describing operations of determining whether to perform grouping according to whether the first handwriting input and the second handwriting input of the first type are located in the same area among multiple divided areas by an electronic device according to an embodiment.

Referring to FIG. 7A, according to an embodiment, in operation 711, the electronic device 301 (e.g., the electronic device 301 of FIG. 3) may identify the first distance between the last stroke of the first handwriting input of the first type and the first stroke of the second handwriting input of the first type, included in the first screen.

According to an embodiment, in operation 713, the electronic device 301 may identify whether the first handwriting input and the second handwriting input are located within the same area among multiple areas included in the first screen. According to an embodiment, the first screen may include a screen divided into multiple areas. Alternatively, according to an embodiment, the electronic device 301 may identify whether the first handwriting input and the second handwriting input are located within the same area among multiple areas included in the first screen only in case that the first distance is greater than the designated distance. According to an embodiment, the electronic device 301 may determine that the first handwriting input and the second handwriting input belong to as the same group in case that the first distance is less than the designated distance.

According to an embodiment, upon identifying that the first handwriting input and the second handwriting input are located within the same area (Yes in operation 713), the electronic device 301 may adjust the first distance to be shorter according to a designated first rule, in operation 715. For example, the designated first rule may refer to dividing the first distance by a designated value. For example, the designated first rule may refer to subtracting a designated value from the first distance. However, this is merely an example, and embodiments of the disclosure may adjust the first distance to be shorter according to various rules.

According to an embodiment, in operation 717, the electronic device 301 may determine the group of the first handwriting input and the second handwriting input, based on a second distance obtained by adjusting the first distance to be shorter. According to an embodiment, the electronic device 301 may determine the group of the first handwriting input and the second handwriting input, based on comparing the second distance with a designated distance. The electronic device 301 may determine that the first handwriting input and the second handwriting input belong to different groups in case that the second distance is greater than the designated distance. The electronic device 301 may determine that the first handwriting input and the second handwriting input belong to the same group in case that the second distance is not greater than the designated distance.

According to an embodiment, upon identifying that the first handwriting input and the second handwriting input are not located within the same area (No in operation 713), the electronic device 301 may adjust the first distance to be longer according to a designated second rule, in operation 719. For example, the designated second rule may refer to multiplying the first distance by a designated value greater than 1. For example, the designated second rule may refer to adding a designated value to the first distance. However, this is merely an example, and embodiments of the disclosure may adjust the first distance to be longer according to various rules.

According to an embodiment, in operation 721, the electronic device 301 may determine the group of the first handwriting input and the second handwriting input, based on a third distance obtained by adjusting the first distance to be longer. According to an embodiment, the electronic device 301 may determine the group of the first handwriting input and the second handwriting input, based on comparing the third distance with a designated distance. The electronic device 301 may determine that the first handwriting input and the second handwriting input belong to different groups in case that the third distance is greater than the designated distance. The electronic device 301 may determine that the first handwriting input and the second handwriting input belong to the same group in case that the third distance is not greater than the designated distance.

According to an embodiment, the designated values of the first rule and the second rule may be set to be different from or identical to each other.

Accordingly, the electronic device 301 according to an embodiment may group multiple handwriting inputs located in the same area into the same group, thereby increasing the readability of the multiple handwriting inputs.

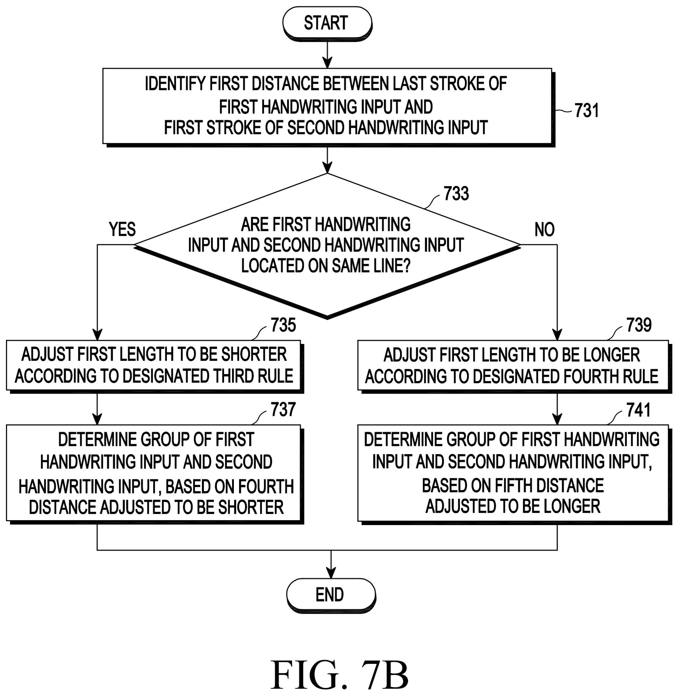

FIG. 7B is a flowchart for describing operations of determining whether to perform grouping according to whether the first handwriting input and the second handwriting input of the first type are located on the same line by an electronic device according to an embodiment.

Referring to FIG. 7B, according to an embodiment, in operation 731, the electronic device 301 (e.g., the electronic device 301 of FIG. 3) may identify the first distance between the last stroke of the first handwriting input of the first type and the first stroke of the second handwriting input of the first type, included in the first screen.

According to an embodiment, in operation 733, the electronic device 301 may identify whether the first handwriting input and the second handwriting input are located on the same line. Alternatively, according to an embodiment, the electronic device 301 may identify whether the first handwriting input and the second handwriting input are located on the same line only in case that the first distance is greater than a designated distance. According to an embodiment, the electronic device 301 may determine that the first handwriting input and the second handwriting input belong to the same group in case that the first distance is less than the designated distance.

According to an embodiment, upon identifying that the first handwriting input and the second handwriting input are located on the same line (Yes in operation 733), the electronic device 301 may adjust the first distance to be shorter according to a designated third rule, in operation 735. For example, the designated third rule may refer to dividing the first distance by a designated value greater than 1. For example, the designated third rule may refer to subtracting a designated value from the first distance. However, this is merely an example, and embodiments of the disclosure may adjust the first distance to be shorter according to various rules.

According to an embodiment, in operation 737, the electronic device 301 may determine the group of the first handwriting input and the second handwriting input, based on a fourth distance adjusted to be shorter. According to an embodiment, the electronic device 301 may determine the group of the first handwriting input and the second handwriting input, based on comparing the fourth distance with a designated distance. The electronic device 301 may determine that the first handwriting input and the second handwriting input belong to different groups in case that the fourth distance is greater than the designated distance. The electronic device 301 may determine that the first handwriting input and the second handwriting input belong to the same group in case that the fourth distance is not greater than the designated distance.

According to an embodiment, upon identifying that the first handwriting input and the second handwriting input are not located on the same line (No in operation 733), the electronic device 301 adjust the first distance to be longer according to a designated fourth rule in operation 739.

According to an embodiment, in operation 741, the electronic device 301 may determine the group of the first handwriting input and the second handwriting input based on a fifth distance adjusted to be longer. According to an embodiment, the electronic device 301 may determine the group of the first handwriting input and the second handwriting input, based on comparing the fifth distance with a designated distance. The electronic device 301 may determine that the first handwriting input and the second handwriting input belong to different groups in case that the fifth distance is greater than the designated distance. The electronic device 301 may determine that the first handwriting input and the second handwriting input belong to the same group in case that the fifth distance is not greater than the designated distance.

According to an embodiment, the designated values of the third rule and the fourth rule may be set to be different from or identical to each other.

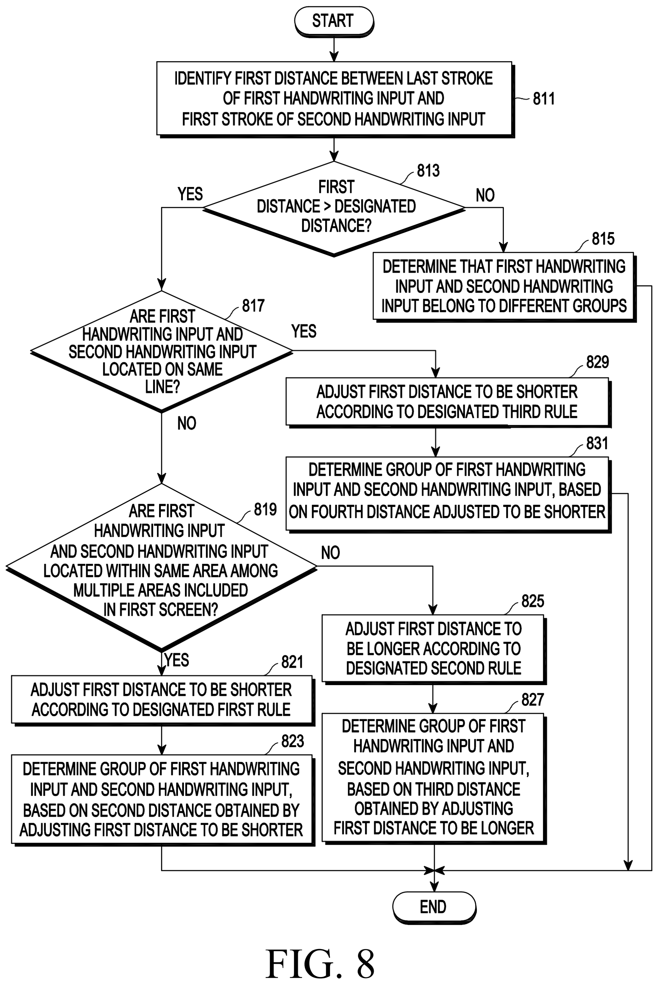

FIG. 8 is a flowchart for describing operations of determining whether to group at least one handwriting input of a first type by an electronic device according to an embodiment.

According to an embodiment, the electronic device 301 (e.g., the electronic device 301 of FIG. 3) may display a first screen including a first handwriting input and a second handwriting input of a first type on the display 360 (e.g., the display 360 of FIG. 3). The first screen may include a screen divided into multiple areas.

Referring to FIG. 8, according to an embodiment, in operation 811, the electronic device 301 (e.g., the electronic device 301 of FIG. 3) may identify the first distance between the last stroke of the first handwriting input of the first type and the first stroke of the second handwriting input of the first type.

According to an embodiment, in operation 813, the electronic device 301 may identify whether the first distance is greater than a designated distance.

According to an embodiment, upon identifying that the first distance is not greater than the designated distance (No in operation 813), the electronic device 301 may determine that first handwriting input and the second handwriting input are the same input, in operation 815.

According to an embodiment, upon determining that the first distance is greater than the designated distance (Yes in operation 813), the electronic device 301 may identify whether the first handwriting input and the second handwriting input are located on the same line, in operation 817.

According to an embodiment, upon identifying that the first handwriting input and the second handwriting input are not located on the same line (No in operation 817), the electronic device 301 may identify whether the first handwriting input and the second handwriting input are located within the same area among multiple areas included in the first screen, in operation 819.

According to an embodiment, upon identifying that the first handwriting input and the second handwriting input are located within the same area among multiple areas included in the first screen (Yes in operation 819), the electronic device 301 may adjust the first distance to be shorter according to a designated first rule in operation 921. For example, the designated first rule may refer to dividing the first distance by a designated value greater than 1. For example, the designated first rule may refer to subtracting a designated value from the first distance. However, this is merely an example, and embodiments of the disclosure may adjust the first distance to be shorter according to various rules.

According to an embodiment, in operation 823, the electronic device 301 may determine the group of the first handwriting input and the second handwriting input, based on a second distance obtained by adjusting the first distance to be shorter.

According to an embodiment, upon identifying that the first handwriting input and the second handwriting input are not located within the same area (No in operation 819), the electronic device 301 may adjust the first distance to be longer according to a designated second rule in operation 825. For example, the designated second rule may refer to multiplying the first distance by a designated value greater than 1. For example, the designated second rule may refer to adding a designated value to the first distance. However, this is merely an example, and embodiments of the disclosure may adjust the first distance to be longer according to various rules.

According to an embodiment, in operation 827, the electronic device 301 may determine the group of the first handwriting input and the second handwriting input, based on a third distance obtained by adjusting first distance to be longer.

According to an embodiment, upon identifying that the first handwriting input and the second handwriting input are located on the same line (Yes in operation 817), the electronic device 301 may adjust the first distance to be shorter according to a designated third rule in operation 929. For example, the designated third rule may refer to dividing the first distance by a designated value greater than 1. For example, the designated third rule may refer to subtracting a designated value from the first distance. However, this is merely an example, and embodiments of the disclosure may adjust the first distance to be shorter according to various rules.

According to an embodiment, in operation 831, the electronic device 301 may determine the group of the first handwriting input and the second handwriting input, based on a fourth distance adjusted to be shorter.

According to an embodiment, the designated values in operations 821, 825, and 829 may be identical to or different from each other.

Accordingly, the electronic device 301 according to an embodiment may refine the grouping of multiple handwriting inputs by considering the distance between the multiple handwriting inputs, and whether the multiple handwriting inputs are located on the same line and in the same area, thereby increasing the readability of the multiple handwriting inputs.

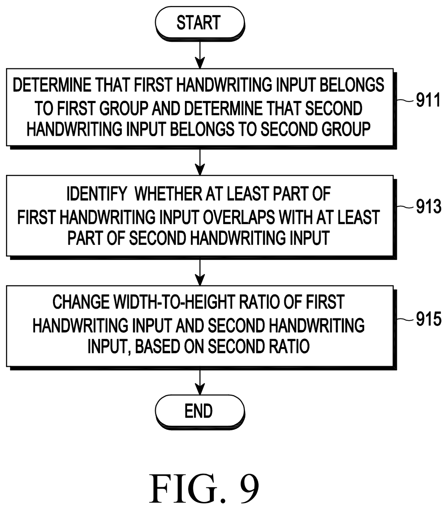

FIG. 9 is a flowchart for describing operations of adjusting the width-to-height ratio of a first handwriting input of a first type and a second handwriting input, in case that at least a part of the first handwriting input overlaps with at least a part of the second handwriting input, by an electronic device according to an embodiment.

According to an embodiment, the electronic device 301 (e.g., the electronic device 301 of FIG. 3) may display a first screen including at least one handwriting input of a first type and at least one handwriting input of a second type on the display 360 (e.g., the display 360 of FIG. 3) at a first ratio. According to an embodiment, the electronic device 301 may identify a command to change the width-to-height ratio of the first screen from to a second ratio. For example, the electronic device 301 may identify the aforementioned command in case of changing from a portrait mode to a landscape mode according to a rotation of the electronic device 301. For example, the command may refer to a command to display a second screen on the display 360, with the first ratio of the first screen changed to the second ratio.

According to an embodiment, the at least one handwriting input of the first type may include text. The text may include Korean characters, English letters, and numbers. Depending on the implementation, the at least one handwriting input of the first type may also include a handwriting input that is not text. For example, the at least one handwriting input of the first type may further include a handwriting input representing an object displayed over a date of the calendar. For example, the object displayed over the date of the calendar may include various shapes such as a circle shape, a triangle shape, a square shape, or a check shape.

According to an embodiment, the at least one handwriting input of the second type may include handwriting inputs (e.g., shapes, line segments) representing non-text objects not included in the first type. In addition, the at least one handwriting input of the second type may include a handwriting input representing an object displayed over at least a part of a first area included in multiple areas and over at least a part of a second area adjacent to the first area. For example, the object displayed over at least a part of the first area and over at least a part of the second area adjacent to the first area may include a handwriting input representing an arrow shape. Depending on the implementation, in case that a text is surrounded by a non-text object, and in case that the text surrounded by the object is deemed to be inseparable from the object, the electronic device 301 may determine that the text surrounded by the object and the object are handwriting inputs of the second type. Upon identifying that the text surrounded by the object is separable from the object, the electronic device 301 may determine that the text surrounded by the object is a handwriting input of the first type, and may determine that the object is a handwriting input of the second type.

Referring to FIG. 9, according to an embodiment, in operation 911, the electronic device 301 may determine that the first handwriting input of the first type belongs to a first group and may determine that the second handwriting input of the first type belongs to a second group different from the first group.

According to an embodiment, in operation 913, the electronic device 301 may identify (or determine) whether at least a part of the first handwriting input overlaps with at least a part of the second handwriting input. According to an embodiment, in case that the width-to-height ratio of the first handwriting input to be displayed on the second screen and the width-to-height ratio of the second handwriting input are maintained identical to the width-to-height ratio of the first handwriting input on the first screen and the width-to-height ratio of the second handwriting input on the first screen, the electronic device 301 may identify (or determine) whether at least a part of the first handwriting input overlaps with at least a part of the second handwriting input. According to an embodiment, in case that at least a part of a first area corresponding to the first group overlaps with a part of a second area corresponding to the second group, the electronic device 301 may identify that at least a part of the first handwriting input overlaps with at least a part of the second handwriting input. The first area may refer to an area configured by multiple strokes of the first handwriting input, and the second area may refer to an area configured by multiple strokes of the second handwriting input.

According to an embodiment, upon identifying (or determining) that at least a part of the first handwriting input overlaps with at least a part of the second handwriting input, the electronic device 301 may change the width-to-height ratio of the first handwriting input and the second handwriting input to be displayed on the second screen, based on a second ratio, in operation 915.

According to an embodiment, upon identifying (or determining) that at least a part of the first handwriting input does not overlap with at least a part of the second handwriting input, the electronic device 301 may maintain the width-to-height ratio of the first handwriting input and the second handwriting input to be displayed on the second screen identical to the width-to-height ratio of the first handwriting input and the second handwriting input displayed on the first screen.

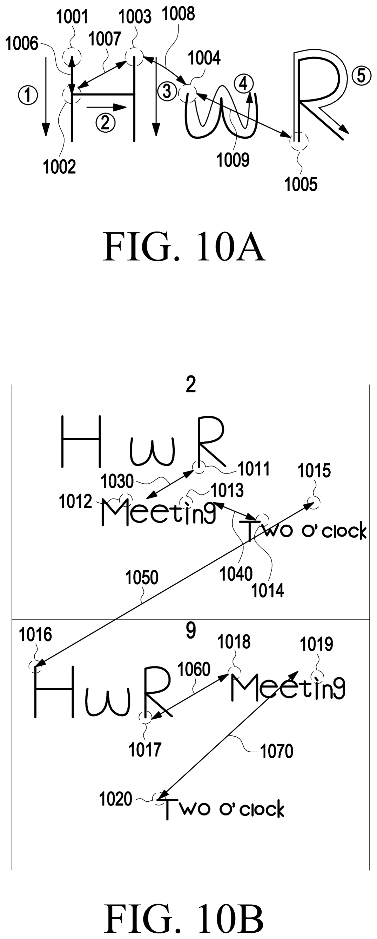

FIG. 10A is a diagram for describing operations of identifying the distance between multiple strokes included in at least one handwriting input of a first type by an electronic device according to an embodiment.

According to an embodiment, the electronic device 301 (e.g., the electronic device 301 of FIG. 3) may identify the distance between multiple strokes included in at least one handwriting input of a first type. For example, at least one handwriting input may refer to a handwriting input on a syllable basis. A stroke may refer to a continuous mark from a point at which an input (e.g., a touch input) begins to a point at which the input (e.g., the touch input) is released. According to an embodiment, the electronic device 301 may identify the distance between starting points of multiple strokes. According to an embodiment, the electronic device 301 may identify the distance between a first stroke input on the display 360 (e.g., the display 360 of FIG. 3) at the *n*^{th} instance and a second stroke input on the display 360 at the (*n*+1)^{th} instance. In this regard, *n* may denote a natural number. For example, the electronic device 301 may identify the distance between the starting point of the first stroke and the starting point of the second stroke. For example, the electronic device 301 may identify the distance between the ending point of the first stroke and the starting point of the second stroke. However, this is one example, and embodiments of the disclosure are not limited thereto, and distances may be identified in various ways. Hereinafter, operations in which the electronic device 301 identifies the distance between starting points of multiple strokes will be described in detail.

Referring to FIG. 10A, according to an embodiment, the electronic device 301 may identify the distance 1006 between the starting point 1001 of the first stroke (a stroke in direction ①) of the first handwriting input H included in at least one handwriting input and the starting point 1002 of the second stroke (a stroke in direction ②) of the first handwriting input H. According to an embodiment, the electronic device 301 may identify the distance 1007 between the starting point 1002 of the second stroke and the starting point 1003 of the third stroke (a stroke in direction ③) of the first handwriting input H.

According to an embodiment, the electronic device 301 may identify the distance 1008 between the starting point 1003 of the third stroke and the starting point 1004 of the fourth stroke (a stroke in direction ④) of the second handwriting input w included in at least one handwriting input.

According to an embodiment, the electronic device 301 may identify the distance 1009 between the starting point 1004 of the fourth stroke and the starting point 1005 of the fourth stroke (a stroke in direction ⑤) of the third handwriting input R included in at least one handwriting input.

According to an embodiment, the electronic device 301 may compare respective distances 1006, 1007, 1008, and 1009 between the strokes with a designated distance and may determine whether to group at least one handwriting input, based on the result of comparison.

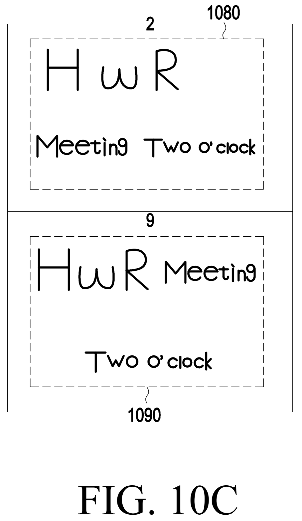

FIG. 10B is a diagram for describing operations of identifying the distance between strokes of at least one handwriting input representing a word by an electronic device according to an embodiment. FIG. 10C is a diagram for describing operations of determining whether to group at least one handwriting input, based on the distance between multiple strokes, by an electronic device according to an embodiment.

Referring to FIG. 10B, according to an embodiment, the electronic device 301 (e.g., the electronic device 301 of FIG. 3) may identify the distance between multiple strokes included in at least one handwriting input of a first type. For example, at least one handwriting input may refer to a handwriting input on a word basis. For example, the electronic device 301 may identify a handwriting input on a word basis, based on an AI model. For example, the electronic device 301 may identify a handwriting input on a word basis, based on spacing. A stroke may refer to a continuous mark from a point at which an input begins to a point at which the input is released.

According to an embodiment, an electronic device 301 may identify the distance 1030 between the starting point 1011 of the last stroke of the first handwriting input (e.g., HwR) representing the first word and the starting point 1012 of the first stroke of the second handwriting input (e.g., meeting) representing the second word. According to an embodiment, the electronic device 301 may identify the distance 1040 between the starting point 1013 of the last stroke of the second handwriting input (e.g., meeting) representing the second word and the starting point 1014 of the first stroke of the third handwriting input (e.g., two o'clock) representing the third word. According to an embodiment, the electronic device 301 may identify the distance 1050 between the starting point 1015 of the last stroke of the third handwriting input (e.g., two o'clock) representing the third word and the starting point 1016 of the first stroke of the fourth handwriting input (e.g., HwR) representing the fourth word. According to an embodiment, the electronic device 301 may identify the distance 1060 between the starting point 1017 of the last stroke of the fourth handwriting input (e.g., HwR) representing the fourth word and the starting point 1018 of the first stroke of the fifth handwriting input (e.g., meeting) representing the fifth word. According to an embodiment, the electronic device 301 may identify the distance 1070 between the starting point 1019 of the last stroke of the fifth handwriting input (e.g., meeting) representing the fifth word and the starting point 1020 of the first stroke of the sixth handwriting input (e.g., two o'clock) representing the sixth word.

According to an embodiment, the electronic device 301 may identify whether the distance 1030 is greater than a designated distance. According to an embodiment, upon identifying that the distance 1030 is greater than the designated distance, the electronic device 301 may identify whether the first handwriting input (e.g., HwR) and the second handwriting input (e.g., meeting) are located on the same line. According to an embodiment, upon identifying that the first handwriting input (e.g., HwR) and the second handwriting input (e.g., meeting) are not located on the same line, the electronic device 301 may identify whether the first handwriting input (e.g., HwR) and the second handwriting input (e.g., meeting) are located in the same area (e.g., the area marked with 2). According to an embodiment, based on identifying that the first handwriting input (e.g., HwR) and the second handwriting input (e.g., meeting) are located in the same area (e.g., the area marked with 2), the electronic device 301 may adjust the distance 1030 to be shorter according to a designated first rule.

According to an embodiment, the electronic device 301 may identify whether the distance 1040 is greater than a designated distance. According to an embodiment, upon identifying that the distance 1040 is smaller than the designated distance, the electronic device 301 may determine that the second handwriting input (e.g., meeting) and the third handwriting input (e.g., two o'clock) belong to the same group.

According to an embodiment, the electronic device 301 may identify whether the distance 1050 is greater than a designated distance. According to an embodiment, upon identifying that the distance 1050 is greater than the designated distance, the electronic device 301 may identify whether the third handwriting input (e.g., two o'clock) and the fourth handwriting input (e.g., HwR) are located on the same line. According to an embodiment, upon identifying that the third handwriting input (e.g., two o'clock) and the fourth handwriting input (e.g., HwR) are not located on the same line, the electronic device 301 may identify whether the third handwriting input (e.g., two o'clock) and the fourth handwriting input (e.g., HwR) are located in the same area (e.g., the area marked with 2). According to an embodiment, based on identifying that that the third handwriting input (e.g., two o'clock) and the fourth handwriting input (e.g., HwR) are not located in the same area, the electronic device 301 may adjust the distance 1050 to be longer according to a designated second rule.

According to an embodiment, the electronic device 301 may identify whether the distance 1060 is greater than a designated distance. According to an embodiment, upon identifying that the distance 1060 is greater than the designated distance, the electronic device 301 may identify whether the fourth handwriting input (e.g., HwR) and the fifth handwriting input (e.g., meeting) are located on the same line. According to an embodiment, based on identifying that the fourth handwriting input (e.g., HwR) and the fifth handwriting input (e.g., meeting) are located on the same line, the electronic device 301 may adjust the distance 1060 to be shorter according to a designated third rule.

According to an embodiment, the electronic device 301 may identify whether the distance 1070 is greater than a designated distance. According to an embodiment, upon identifying that the distance 1070 is greater than the designated distance, the electronic device 301 may identify whether the fifth handwriting input (e.g., meeting) and the sixth handwriting input (e.g., two o'clock) are located on the same line. According to an embodiment, upon identifying that the fifth handwriting input (e.g., meeting) and the sixth handwriting input (e.g., two o'clock) are not located on the same line, the electronic device 301 may identify whether the fifth handwriting input (e.g., meeting) and the sixth handwriting input (e.g., two o'clock) are located in the same area (e.g., the area marked with 9). According to an embodiment, based on identifying that the fifth handwriting input (e.g., meeting) and the sixth handwriting input (e.g., two o'clock) are located in the same area, the electronic device 301 may adjust the distance 1070 to be shorter according to a designated first rule.

Referring to FIG. 10C, according to an embodiment, the electronic device 301 may compare an adjusted distance with a designated distance, thereby determining whether to group multiple handwriting inputs.

According to an embodiment, based on identifying that the distance 1040 is smaller than a designated distance, the electronic device 301 may determine that the second handwriting input (e.g., meeting) and the third handwriting input (e.g., two o'clock) belong to the same group. According to an embodiment, based on the distance 1030 being adjusted to be shorter, the electronic device 301 may identify whether the adjusted distance is smaller than a designated distance. According to an embodiment, based on identifying that the adjusted distance is smaller than the designated distance, the electronic device 301 may determine that the first handwriting input (e.g., HwR), the second handwriting input (e.g., meeting), and the third handwriting input (e.g., two o'clock) belong to the same first group. The electronic device 301 may determine a first area 1080 corresponding to the first group.

According to an embodiment, based on the distances 1060 and 1070 being adjusted to be shorter, the electronic device 301 may identify whether the adjusted distances are smaller than a designated distance. According to an embodiment, based on identifying that the adjusted distances are smaller than the designated distance, the electronic device 301 may determine that the fourth handwriting input (e.g., HwR), the fifth handwriting input (e.g., meeting), and the sixth handwriting input (e.g., two o'clock) belong to the same second group. The electronic device 301 may determine a second area 1090 corresponding to the second group.

According to an embodiment, based on the distance 1050 being adjusted to be longer, the electronic device 301 may identify whether the adjusted distance is smaller than a designated distance. According to an embodiment, based on identifying that the adjusted distance is greater than the designated distance, the electronic device 301 may determine the fourth handwriting input (e.g., HwR) belongs to a second group different from the first group.

For example, the electronic device 301 may adjust the size, arrangement, and position of the first area 1080 and may adjust the size, arrangement, and position of the second area 1090. Based on the size, arrangement, and position of the first area 1080 being adjusted, the size, arrangement, and position of the first handwriting input, the second handwriting input, and the third handwriting input included in the first area 1080 may be adjusted. Based on the size, arrangement, and position of the second area 1090 being adjusted, the size, arrangement, and position of the fourth handwriting input, the fifth handwriting input, and the sixth handwriting input included in the second area 1090 may be adjusted.

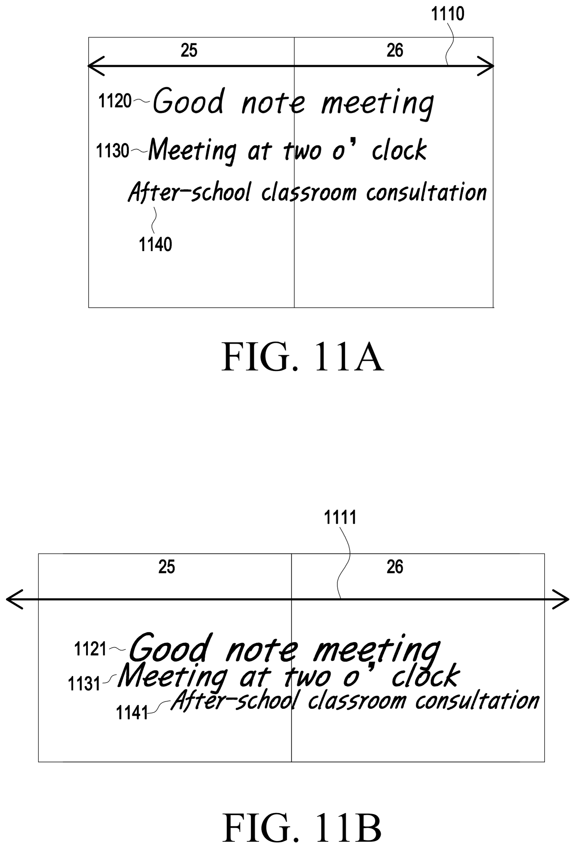

FIG. 11A is a diagram illustrating a first screen displayed on a display in case that an electronic device according to an embodiment is in a portrait mode.

Referring to FIG. 11A, according to an embodiment, the electronic device 301 (e.g., the electronic device 301 of FIG. 3) may, in the case of a portrait mode, display a first screen including multiple handwriting inputs on the display 360 (e.g., the display 360 of FIG. 3). The first screen can include a screen divided into multiple areas. The first screen may also include a screen related to a calendar.

For example, the first screen may include multiple handwriting inputs 1120, 1130, and 1140 and a handwriting input 1110 representing an object displayed over at least a part of the first area (e.g., the area marked with 25) and at least a part of the second area (e.g., the area marked with 26) adjacent to the first area.

FIG. 11B is a diagram illustrating a second screen displayed on a display in case that a conventional electronic device according to a comparative example switches from a portrait mode to a landscape mode.

Referring to FIG. 11B, the conventional electronic device according to a comparative example may identify the coordinates of multiple handwriting inputs 1120, 1130, and 1140 and a handwriting input 1110 representing an object, displayed on a first screen, based on a command to switch from a portrait mode to a landscape mode. Based on a command to switch from a portrait mode to a landscape mode, the conventional electronic device according to a comparative example may determine to change the width-to-height ratio of the first screen from a first ratio to a second ratio.

The conventional electronic device according to a comparative example may identify the coordinates of the multiple handwriting inputs 1120, 1130, 1140 and the handwriting input 1110 representing an object, on the first screen.

The conventional electronic device according to a comparative example may determine the coordinates of the multiple handwriting inputs 1120, 1130, 1140 and the handwriting input 1110 representing an object, which are to be displayed on a second screen, based on the second ratio. The conventional electronic device according to a comparative example may display a second screen including the multiple handwriting inputs 1121, 1131, and 1141 and the handwriting input 1111 representing an object according to the determined coordinates.

The conventional electronic device according to a comparative example may display the handwriting inputs 1121, 1131, and 1141 overlapping each other. The conventional electronic device according to a comparative example may display the handwriting inputs 1121, 1131, and 1141 tilted in the horizontal direction. The conventional electronic device according to a comparative example may display the handwriting input 1111 representing an object with an increased length.

According to the comparative example, the readability and aesthetic quality of the multiple handwriting inputs displayed on the second screen may be degraded.

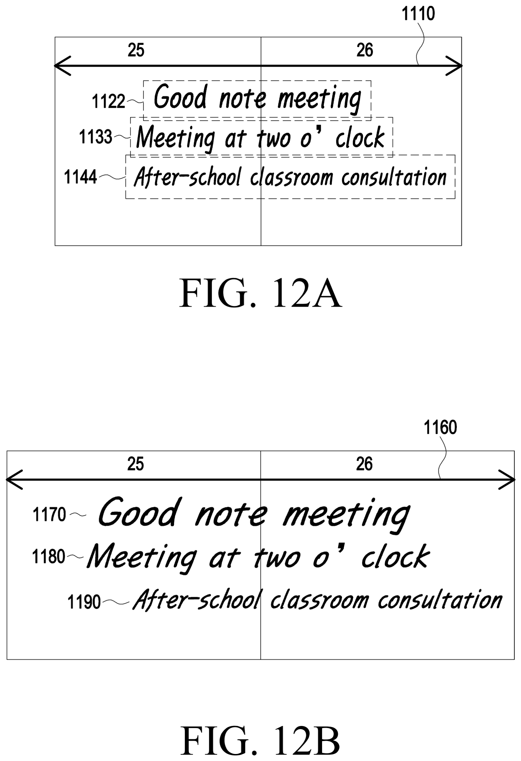

FIG. 12A is a diagram for describing operations of grouping multiple handwriting inputs included in a first screen in case that an electronic device according to an embodiment is in a portrait mode.

Referring to FIG. 12A, according to an embodiment, the electronic device 301 (e.g., the electronic device 301 of FIG. 3) may, based on a command to switch from a portrait mode to a landscape mode, distinguish multiple handwriting inputs 1120, 1130, and 1140 and an object 1110 by using a trained AI model. According to an embodiment, the command may refer to a command to adjust the width-to-height ratio of the screen currently displayed on the display 360 from a first ratio to a second ratio.

According to an embodiment, the electronic device 301 may compare the distances between multiple strokes included in the multiple handwriting inputs 1120, 1130, and 1140 with a designated distance. According to an embodiment, the electronic device 301 may identify whether the multiple handwriting inputs 1120, 1130, 1140 are located in the same area or on the same line.

According to an embodiment, the electronic device 301 may determine whether to group the multiple handwriting inputs 1120, 1130, and 1140, based on the distances between multiple strokes included in the multiple handwriting inputs 1120, 1130, and 1140 and whether the multiple handwriting inputs 1120, 1130, 1140 are located in the same area or on the same line.

According to an embodiment, the electronic device 301 may determine that the multiple handwriting inputs 1120, 1130, and 1140 belong to a first group, a second group, and a third group, respectively. According to an embodiment, the electronic device 301 may determine that first multiple handwriting inputs (e.g., Good note meeting) belong to a first group, may determine that second multiple handwriting inputs (e.g., meeting two o'clock) belong to a second group, and may determine that third multiple handwriting inputs (e.g., after-school classroom consultation) belong to a third group. According to an embodiment, the electronic device 301 may identify an area 1122 corresponding to the first group, an area 1133 corresponding to the second group, and an area 1144 corresponding to the third group.

FIG. 12B is a diagram for describing operations of adjusting the width-to-height ratio of multiple handwriting inputs included in a first screen in case that an electronic device according to an embodiment has switched from a portrait mode to a landscape mode.

Referring to FIG. 12B, according to an embodiment, in case that width-to-height ratio of multiple handwriting inputs to be displayed on a second screen is maintained identical to the width-to-height ratio of multiple handwriting inputs 1120, 1130, and 1140 on the first screen, the electronic device 301 (e.g., the electronic device 301 of FIG. 3) may identify whether at least a part of the multiple handwriting inputs 1120, 1130, and 1140 overlaps.

According to an embodiment, the electronic device 301 may identify that at least a part of the area 1122 corresponding to the first group overlaps with at least a part of the area 1133 corresponding to the second group, and at least a part of the area 1133 corresponding to the second group overlaps with at least a part of the area 1144 corresponding to the third group. According to an embodiment, the electronic device 301 may identify that at least a part of the first multiple handwriting inputs 1120 of the first group overlaps with the second multiple handwriting inputs 1130 of the second group, and at least a part of the second set of multiple handwriting inputs 1130 of the second group overlaps with the third multiple handwriting inputs 1140 of the third group.

According to an embodiment, upon identifying that at least a part of the multiple handwriting inputs 1120, 1130, and 1140 overlaps, the electronic device 301 may change the width-to-height ratio of multiple handwriting inputs 1170, 1180, and 1190 to be displayed on the second screen, based on a second ratio.

According to an embodiment, the electronic device 301 may change the width-to-height ratio of the handwriting input 1160 representing an object to be displayed on the second screen, based on the second ratio.

According to an embodiment, the electronic device 301 may display multiple handwriting inputs 1170, 1180, and 1190 without overlapping each other. According to an embodiment, the electronic device 301 may relatively improve the readability and aesthetic quality of multiple handwriting inputs displayed on the second screen compared to an electronic device according to a comparative example.

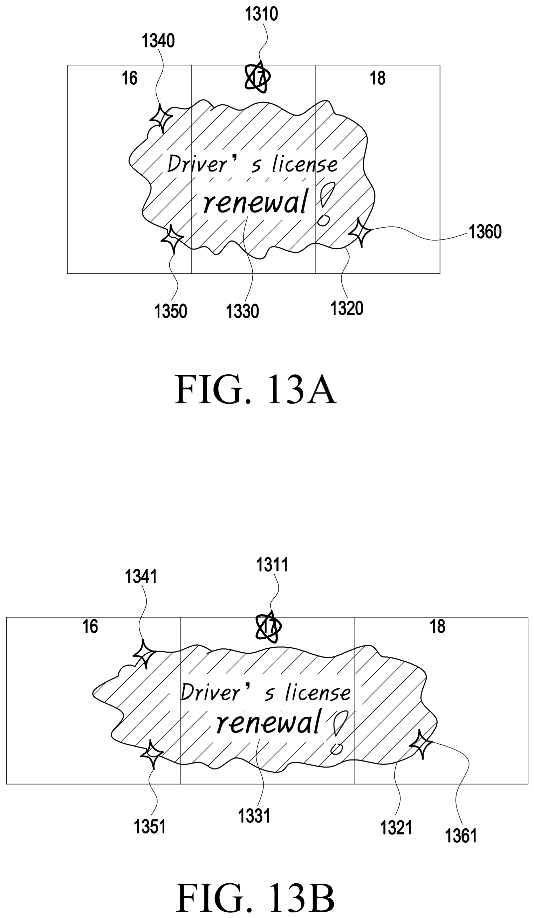

FIG. 13A and FIG. 13B are diagrams for describing operations of adjusting the ratio of at least one handwriting input of a second type included in a first screen in case that an electronic device according to an embodiment has switched from a portrait mode to a landscape mode.

Referring to FIG. 13A, the electronic device 301 (e.g., the electronic device 301 of FIG. 3) may display a first screen on the display 360 (e.g., the display 360 of FIG. 3) in a portrait mode. The first screen can include a screen related to a calendar including a date. For example, the screen related to a calendar may include a screen having dates displayed in multiple areas, respectively.

According to an embodiment, the electronic device 301 may identify a first-type handwriting input 1310 included in the first screen. The first-type handwriting input may further include a handwriting input 1310 representing an object displayed over the date (e.g., 17) of the calendar. The first-type handwriting input may further include handwriting inputs 1341, 1351, and 1361 representing special characters (e.g., diamond shapes).

According to an embodiment, in case that the text 1330 (e.g., driver's license renewal) is surrounded by a non-text object 1320, the electronic device 301 may identify whether the text 1330 can be separated from the object 1320. For example, the non-text object 1320 may refer to an object having a colored interior. For example, the text 1330 may refer to a text displayed over the non-text object 1320.

According to an embodiment, the electronic device 301 may identify whether a handwriting input corresponding to the non-text object 1320 overlaps with a handwriting input corresponding to the text 1330. According to an embodiment, based on identifying that the handwriting input corresponding to the non-text object 1320 overlaps with the handwriting input corresponding to the text 1330, the electronic device 301 may identify that the text 1330 cannot be separated from the object 1320. According to an embodiment, the electronic device 301 may determine that the text 1330 is a second-type handwriting input.

Referring to FIG. 13B, the electronic device 301 may display a second screen by changing the width-to-height ratio of the first screen from a first ratio to a second ratio, based on a command to switch from a portrait mode to a landscape mode.

According to an embodiment, the second screen may include a text 1331 and a handwriting input 1321 representing an object at a width-to-height ratio changed based on the second ratio.

According to an embodiment, the electronic device 301 may maintain the width-to-height ratio of the first-type handwriting inputs 1311, 1341, 1351, and 1361 displayed on the second screen identical to the width-to-height ratio of the first-type handwriting input 1310 displayed on the first screen.

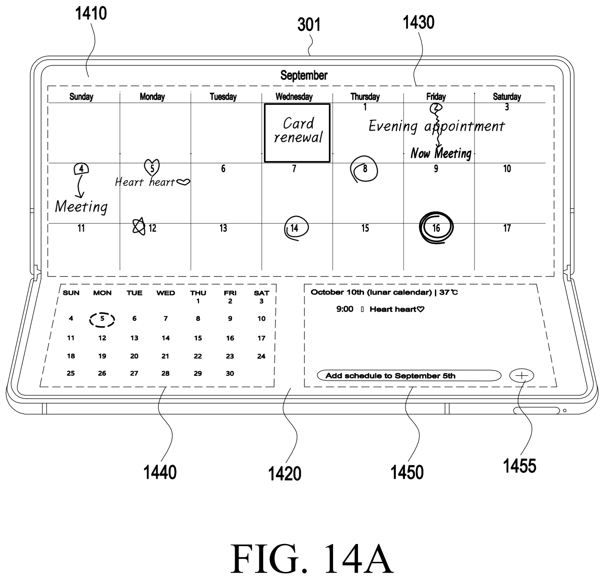

FIG. 14A is a diagram for describing operations in which an electronic device according to an embodiment displays a screen related to a calendar through a display.

According to an embodiment, the electronic device 301 (e.g., the electronic device 301 of FIG. 3) may be implemented as a foldable device.

Referring to FIG. 14A, according to an embodiment, the display 360 (e.g., the display 360 of FIG. 3) may include a first area 1410 disposed on one side with reference to a folding area and a second area 1420 disposed on the other side with reference to the folding area.

According to an embodiment, the electronic device 301 may display, in the first area 1410, a part 1430 of a third screen obtained by changing the width-to-height ratio of the second screen (e.g., the second screen of FIG. 2C) from a second ratio to a third ratio, based on the folding of the electronic device 301. However, this is an example, and the electronic device 301 may also display the entire third screen in the first area 1410. For example, the third ratio may refer to a ratio different from the second ratio. Depending on the implementation, according to an embodiment, the third ratio may be identical to the second ratio, and the part 1430 of the third screen may refer to a part of the second screen. Based on the folding of the electronic device 301, the electronic device 301 may also display, in first area 1410, a part of the second screen at the second ratio.

According to an embodiment, the electronic device 301 may maintain the width-to-height ratio of a first-type handwriting input displayed in the part 1430 of the third screen identical to the width-to-height ratio of the first-type handwriting input displayed on the second screen.

According to an embodiment, the electronic device 301 may change the width-to-height ratio of a second-type handwriting input to be displayed in the part 1430 of the third screen, based on the third ratio.

According to an embodiment, the electronic device 301 may display, in the first area 1410, a scrollbar which may display a screen of at least a part of the part 1430 of the third screen and another part of the third screen other than the part 1430. For example, the electronic device 301 may display a screen of another part of the third screen upon identifying an up/down or left/right input regarding the scrollbar.

According to an embodiment, depending on the implementation, a fourth screen 1440 obtained by deleting at least one handwriting input included in the third screen may be displayed in the second area 1420. According to an embodiment, the fourth screen 1440 may include a screen obtained by reducing the size of the third screen by a specific ratio.

According to an embodiment, the electronic device 301 may identify an input (e.g., a touch input or a tap input) regarding a specific date (e.g., September 5) displayed on the fourth screen 1440. According to an embodiment, based on the input regarding the specific date (e.g., September 5), the electronic device 301 may display, on the fifth screen 1450, an object 1455 which may be used to add a schedule (e.g., time, schedule content) regarding the specific date. According to an embodiment, in case that a schedule (e.g., nine o'clock, heart heart) regarding the specific date is added, based on an input regarding the object 1455, the electronic device 301 may display the schedule on the fifth screen 1450.

Depending on the implementation, according to an embodiment, based on an input (e.g., a touch input) regarding the specific date (e.g., September 5) displayed on the fourth screen 1440, the electronic device 301 may display, on the fifth screen 1450, at least one handwriting input (e.g., heart heart) illustrated in an area corresponding to the specific date (e.g., September 5) included in the part 1430 of the third screen. For example, the at least one handwriting input (e.g., heart heart) displayed on the fifth screen 1450 may be the at least one handwriting input (e.g., heart heart) displayed in an area corresponding to the specific date (e.g., September 5) included in the part 1430 of the third screen. For example, the at least one handwriting input (e.g., heart heart) displayed on the fifth screen 1450 may refer to a handwriting input (or text, character) recognized or identified by the electronic device 301 from the at least one handwriting input (e.g., heart heart) displayed on the fifth screen 1450 through character recognition technology.

According to an embodiment, based on an input (e.g., a touch input) regarding the specific date (e.g., September 5) displayed on the fourth screen 1440, the electronic device 301 may enlarge at least one handwriting input (e.g., heart heart) displayed in the area corresponding to the specific date (e.g., September 5) on the part 1430 of the third screen and may display the same in the first area 1410. For example, the electronic device 301 may enlarge the at least one handwriting input (e.g., heart heart) and may display the same at the location of the area corresponding to the specific date (e.g., September 5) included in the part 1430 of the third screen, in the first area 1410.

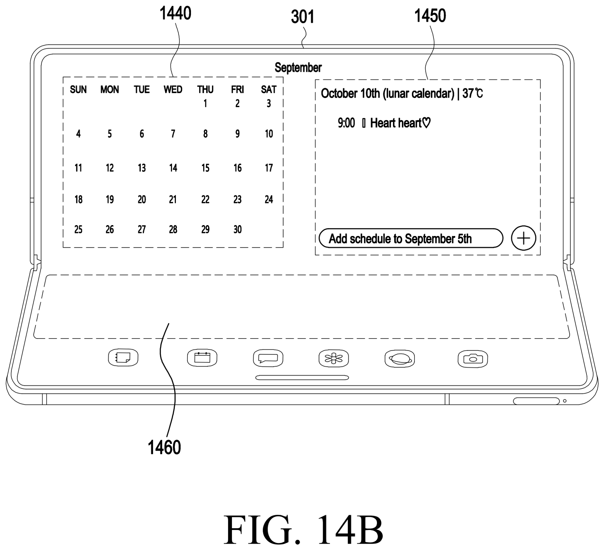

FIG. 14B is a diagram for describing operations in which an electronic device according to an embodiment displays a calendar-related screen through a display.

According to an embodiment, in case that the electronic device 301 is folded, the electronic device 301 may display a fourth screen 1440 and a fifth screen 1450 in the first area 1410 disposed on one side with reference to the folding area.

According to an embodiment, the electronic device 301 may display a sixth screen 1460 which may acquire a handwriting input by the user's body (e.g., hand or finger) or a stylus pen 302, in the second area 1420 disposed on the other side with reference to the folding area. The sixth screen 1460 may be an execution screen of an application. However, this is an example, and the sixth screen 1460 may include various screens.

An electronic device 301 according to an embodiment may include a display 360, a processor 320, and memory 330 storing instructions.

In connection with the electronic device 301 according to an embodiment, the instructions, when executed by the processor 320, may cause the electronic device 301 to display a first screen, the width-to-height ratio of which corresponds to a first ratio, on the display.

In connection with the electronic device 301 according to an embodiment, the first screen may include at least one handwriting input of a first type and at least one handwriting input of a second type.

In connection with the electronic device 301 according to an embodiment, the instructions, when executed by the processor 320, may cause the electronic device 301 to identify a command for changing the width-to-height ratio of the first screen from the first ratio to a second ratio.

In connection with the electronic device 301 according to an embodiment, the instructions, when executed by the processor 320, may cause the electronic device 301 to display a second screen obtained by changing the width-to-height ratio of the first screen to the second ratio, based on the command.

In connection with the electronic device 301 according to an embodiment, the width-to-height ratio of the at least one handwriting input of the first type included in the second screen may be maintained such that the width-to-height ratio of the at least one handwriting input of the first type included in the second screen is same as the width-to-height ratio of the at least one handwriting input of the first type included in the first screen.

In connection with the electronic device 301 according to an embodiment, the width-to-height ratio of the at least one handwriting input of the second type included in the second screen may be changed based on the second ratio.

In connection with the electronic device 301 according to an embodiment, the instructions, when executed by the processor 320, may cause the electronic device 301 to identify the distance between multiple strokes included in the at least one handwriting input of the first type.

In connection with the electronic device 301 according to an embodiment, the instructions, when executed by the processor 320, may cause the electronic device 301 to determine whether to group the at least one handwriting input, based on a comparison between the distance and a designated distance.

In connection with the electronic device 301 according to an embodiment, the instructions, when executed by the processor 320, may cause the electronic device 301 to identify the first distance between the last stroke of a first handwriting input representing a first word and a first stroke of a second handwriting input representing a second word, among multiple strokes included in the at least one handwriting input of the first type.

In connection with the electronic device 301 according to an embodiment, the instructions, when executed by the processor 320, may cause the electronic device 301 to determine whether to group the first handwriting input and the second handwriting input, based on a comparison between the first distance and a designated distance.

In connection with the electronic device 301 according to an embodiment, the instructions, when executed by the processor 320, may cause the electronic device 301 to determine that the first handwriting input belongs to a first group and determine that the second handwriting input belongs to a second group different from the first group based on identifying that the first distance is greater than the designated distance.

In connection with the electronic device 301 according to an embodiment, the instructions, when executed by the processor 320, may cause the electronic device 301 to determine the arrangement or position of the at least one handwriting input, based on whether the grouping is performed.

In connection with the electronic device 301 according to an embodiment, the instructions, when executed by the processor 320, may cause the electronic device 301 to change the width-to-height ratio of the first handwriting input and the second handwriting input, based on the second ratio, based on identifying that at least a part of the first handwriting input and at least a part of the second handwriting input overlap.

In connection with the electronic device 301 according to an embodiment, the first screen of the electronic device 301 may include a screen divided into multiple areas.

In connection with the electronic device 301 according to an embodiment, the instructions, when executed by the processor 320, may cause the electronic device 301 to adjust the first distance to be shorter according to a designated rule based on the first handwriting input and the second handwriting input being located within the same area among the multiple areas.

In connection with the electronic device 301 according to an embodiment, the instructions, when executed by the processor 320, may cause the electronic device 301 to determine that the first handwriting input and the second handwriting input belong to the same group based on the first handwriting input and the second handwriting input being located on the same line.

In connection with the electronic device 301 according to an embodiment, the at least one handwriting input of the second type may include a handwriting input representing an object displayed over at least a part of a first area included in the multiple areas and over at least a part of a second area adjacent to the first area.

In connection with the electronic device 301 according to an embodiment, based on the first screen being a screen related to a calendar including a date, the at least one handwriting input of the first type may include a handwriting input representing an object displayed over the date.

In connection with the electronic device 301 according to an embodiment, the instructions, when executed by the processor 320, may cause the electronic device 301 to identify the command based on changing from a landscape mode to a portrait mode according to a rotation of the electronic device or changing from the portrait mode to the landscape mode.

In connection with a method for operating the electronic device 301 according to an embodiment, the first screen includes at least one handwriting input of a first type and at least one handwriting input of a second type.

The method for operating the electronic device 301 according to an embodiment may include an operation of identifying a command to change the width-to-height ratio of the first screen from the first ratio to a second ratio.

The method for operating the electronic device 301 according to an embodiment may include an operation of displaying a second screen obtained by changing the width-to-height ratio of the first screen to the second ratio, based on the command.

In connection with the method for operating the electronic device 301 according to an embodiment, the width-to-height ratio of the at least one handwriting input of the first type included in the second screen may be maintained such that the width-to-height ratio of the at least one handwriting input of the first type included in the second screen is same as the width-to-height ratio of the at least one handwriting input of the first type included in the first screen.

In connection with the method for operating the electronic device 301 according to an embodiment, the width-to-height ratio of the at least one handwriting input of the second type included in the second screen may be changed based on the second ratio.

The method for operating the electronic device 301 according to an embodiment may include an operation of identifying the distance between multiple strokes included in the at least one handwriting input of the first type.

The method for operating the electronic device 301 according to an embodiment may include an operation of determining whether to group the at least one handwriting input, based on a comparison between the distance and a designated distance.

The method for operating the electronic device 301 according to an embodiment may include an operation of identifying the first distance between the last stroke of a first handwriting input representing a first word and the first stroke of a second handwriting input representing a second word among multiple strokes included in the at least one handwriting input of the first type.

The method for operating the electronic device 301 according to an embodiment may include an operation of determining whether to group the first handwriting input and the second handwriting input, based on a comparison between the first distance and a designated distance.

The method for operating the electronic device 301 according to an embodiment may include an operation of determining that the first handwriting input belongs to a first group and determining that the second handwriting input belongs to a second group based on identifying that the first distance is greater than the designated distance.

The method for operating the electronic device 301 according to an embodiment may include an operation of determining the arrangement or position of the first handwriting input and the second handwriting input, based on whether the grouping is performed.

The method for operating the electronic device 301 according to an embodiment may include an operation of changing the width-to-height ratio of the first handwriting input and the second handwriting input, based on the second ratio, based on identifying that at least a part of the first handwriting input and at least a part of the second handwriting input overlap.

In connection with the method for operating the electronic device 301 according to an embodiment, the first screen of the electronic device 301 may include a screen divided into multiple areas.

The method for operating the electronic device 301 according to an embodiment may include an operation of adjusting the first distance to be shorter according to a designated rule based on the first handwriting input and the second handwriting input being located within the same area among the multiple areas.

The method for operating the electronic device 301 according to an embodiment may include an operation of determining that the first handwriting input and the second handwriting input belong to the same group based on the first handwriting input and the second handwriting input being located on the same line.

In connection with the method for operating the electronic device 301 according to an embodiment, the at least one handwriting input of the second type may include a handwriting input representing an object displayed over at least a part of a first area included in the multiple areas and over at least a part of a second area adjacent to the first area.

In connection with the method for operating the electronic device 301 according to an embodiment, the first screen being a screen related to a calendar including a date, the at least one handwriting input of the first type may include a handwriting input representing an object displayed over the date.

The method for operating the electronic device 301 according to an embodiment may include an operation of identifying the command based on changing from a landscape mode to a portrait mode according to a rotation of the electronic device or changing from the portrait mode to the landscape mode.

A non-transitory recording medium according to an embodiment may store at least one instruction which may execute an operation of displaying a first screen, the width-to-height ratio corresponds to a first ratio, on a display 360 included in the electronic device 301.

In connection with the non-transitory recording medium according to an embodiment, the first screen includes at least one handwriting input of a first type and at least one handwriting input of a second type.

The non-transitory recording medium according to an embodiment may store at least one instruction which may execute an operation of identifying a command to change the width-to-height ratio of the first screen from the first ratio to a second ratio.

The non-transitory recording medium according to an embodiment may store at least one instruction which may execute an operation of displaying a second screen obtained by changing the width-to-height ratio of the first screen to the second ratio, based on the command.

In connection with the non-transitory recording medium according to an embodiment, the width-to-height ratio of the at least one handwriting input of the first type included in the second screen may be maintained such that the width-to-height ratio of the at least one handwriting input of the first type included in the second screen is same as the width-to-height ratio of the at least one handwriting input of the first type included in the first screen.

In connection with the non-transitory recording medium according to an embodiment, the width-to-height ratio of the at least one handwriting input of the second type included in the second screen may be changed based on the second ratio.

The non-transitory recording medium according to an embodiment may store at least one instruction which may execute an operation of identifying the distance between multiple strokes included in the at least one handwriting input of the first type.

The non-transitory recording medium according to an embodiment may store at least one instruction which may execute an operation of determining whether to group the at least one handwriting input, based on a comparison between the distance and a designated distance.

The non-transitory recording medium according to an embodiment may store at least one instruction which may execute an operation of identifying the first distance between the last stroke of a first handwriting input representing a first word and the first stroke of a second handwriting input representing a second word among multiple strokes included in the at least one handwriting input of the first type.

The non-transitory recording medium according to an embodiment may store at least one instruction which may execute an operation of determining whether to group the first handwriting input and the second handwriting input, based on a comparison between the first distance and a designated distance.

The non-transitory recording medium according to an embodiment may store at least one instruction which may execute an operation of determining that the first handwriting input belongs to a first group and determining that the second handwriting input belongs to a second group different from the first group based on identifying that the first distance is greater than the designated distance.

The non-transitory recording medium according to an embodiment may store at least one instruction which may execute an operation of determining the arrangement or position of the first handwriting input and the second handwriting input, based on whether the grouping is performed.

The non-transitory recording medium according to an embodiment may store at least one instruction which may execute an operation of changing the width-to-height ratio of the first handwriting input and the second handwriting input, based on the second ratio, based on identifying that at least a part of the first handwriting input and at least a part of the second handwriting input overlap.

In connection with the non-transitory recording medium according to an embodiment, the first screen may include a screen divided into multiple areas.

The non-transitory recording medium according to an embodiment may store at least one instruction which may execute an operation of adjusting the first distance to be shorter according to a designated rule based on the first handwriting input and the second handwriting input being located within the same area among the multiple areas.

The non-transitory recording medium according to an embodiment may store at least one instruction which may execute an operation of determining that the first handwriting input and the second handwriting input belong to the same group the first handwriting input and the second handwriting input being located on the same line.

In connection with the non-transitory recording medium according to an embodiment, the at least one handwriting input of the second type may include a handwriting input representing an object displayed over at least a part of a first area included in the multiple areas and over at least a part of a second area adjacent to the first area.

In connection with the non-transitory recording medium according to an embodiment, based on the first screen being a screen related to a calendar including a date, the at least one handwriting input of the first type may include a handwriting input representing an object displayed over the date.

The non-transitory recording medium according to an embodiment may store at least one instruction which may execute an operation of identifying the command based on changing from a landscape mode to a portrait mode according to a rotation of the electronic device 301 or changing from the portrait mode to the landscape mode.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101 or 301). For example, a processor (e.g., the processor 120 or 320) of the machine (e.g., the electronic device 101 or 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101 of FIG. 1; 301 of FIG. 3) comprising:
a display (160 of FIG. 1; 360 of FIG. 3);
a processor (120 of FIG. 1; 320 of FIG. 3); and
memory (130 of FIG. 1; 330 of FIG. 3) storing instructions that, when executed by the processor, cause the electronic device to:
display a first screen having a width-to-height ratio corresponding to a first ratio on the display, the first screen including at least one handwriting input of a first type and at least one handwriting input of a second type;
identify a command for changing the width-to-height ratio of the first screen from the first ratio to a second ratio; and
based on the command, display a second screen obtained by changing the width-to-height ratio of the first screen to the second ratio, wherein the width-to-height ratio of the at least one handwriting input of the first type included in the second screen is maintained such that the width-to-height ratio of the at least one handwriting input of the first type included in the second screen is same as the width-to-height ratio of the at least one handwriting input of the first type included in the first screen, and the width-to-height ratio of the at least one handwriting input of the second type included in the second screen is changed based on the second ratio.

2. The electronic device of claim 1, wherein the instructions, when executed by the processor, cause the electronic device to:
identify a distance between multiple strokes included in the at least one handwriting input of the first type; and
determine whether to group the at least one handwriting input, based on a comparison between the distance and a designated distance.

3. The electronic device of claim 1 or 2, wherein the instructions, when executed by the processor, cause the electronic device to:
identify a first distance between a last stroke of a first handwriting input representing a first word and a first stroke of a second handwriting input representing a second word, among multiple strokes included in the at least one handwriting input of the first type; and
determine whether to group the first handwriting input and the second handwriting input, based on a comparison between the first distance and a designated distance.

4. The electronic device of any one of claims 1 to 3, wherein the instructions, when executed by the processor, cause the electronic device to:
based on identifying that the first distance is greater than the designated distance, determine that the first handwriting input belongs to a first group and determine that the second handwriting input belongs to a second group different from the first group.

5. The electronic device of any one of claims 1 to 4, wherein the instructions, when executed by the processor, cause the electronic device to:
determine an arrangement or a position of the at least one handwriting input, based on whether the grouping is performed.

6. The electronic device of any one of claims 1 to 5, wherein the instructions, when executed by the processor, cause the electronic device to:
based on identifying that at least a part of the first handwriting input and at least a part of the second handwriting input overlap, change, based on the second ratio, the width-to-height ratio of the first handwriting input and the second handwriting input.

7. The electronic device of any one of claims 1 to 6, wherein the first screen includes a screen divided into multiple areas, and
wherein the instructions, when executed by the processor, cause the electronic device to:
based on the first handwriting input and the second handwriting input being located within a same area among the multiple areas, adjust the first distance to be shorter according to a designated rule.

8. The electronic device of any one of claims 1 to 7, wherein the instructions, when executed by the processor, cause the electronic device to:
based on the first handwriting input and the second handwriting input being located on a same line, determine that the first handwriting input and the second handwriting input belong to a same group.

9. The electronic device of any one of claims 1 to 8, wherein the first screen includes a screen divided into multiple areas, and
wherein the at least one handwriting input of the second type includes a handwriting input representing an object displayed over at least a part of a first area included in the multiple areas and over at least a part of a second area adjacent to the first area.

10. The electronic device of any one of claims 1 to 9, wherein, based on the first screen being a screen related to a calendar including a date, the at least one handwriting input of the first type includes a handwriting input representing an object displayed over the date.

11. The electronic device of any one of claims 1 to 10, wherein the instructions, when executed by the processor, cause the electronic device to:
based on changing, according to a rotation of the electronic device, from a landscape mode to a portrait mode or from the portrait mode to the landscape mode, identify the command.

12. A method for operating an electronic device, the method comprising:
displaying a first screen having a width-to-height ratio corresponding to a first ratio on a display (160 of FIG. 1; 360 of FIG. 3) included in the electronic device (101 of FIG. 1; 301 of FIG. 3), the first screen including at least one handwriting input of a first type and at least one handwriting input of a second type;
identifying a command for changing the width-to-height ratio of the first screen from the first ratio to a second ratio; and
based on the command, displaying a second screen obtained by changing the width-to-height ratio of the first screen to the second ratio, wherein the width-to-height ratio of the at least one handwriting input of the first type included in the second screen is maintained such that the width-to-height ratio of the at least one handwriting input of the first type included in the second screen is same as the width-to-height ratio of the at least one handwriting input of the first type included in the first screen, and the width-to-height ratio of the at least one handwriting input of the second type is changed based on the second ratio.

13. The method of claim 12, further comprising:
identifying a distance between multiple strokes included in the at least one handwriting input of the first type; and
determining whether to group the at least one handwriting input, based on a comparison between the distance and a designated distance.

14. The method of claim 12 or 13, further comprising:
identifying a first distance between a last stroke of a first handwriting input representing a first word and a first stroke of a second handwriting input representing a second word, among multiple strokes included in the at least one handwriting input of the first type; and
determining whether to group the first handwriting input and the second handwriting input, based on a comparison between the first distance and a designated distance.

15. A non-transitory recording medium storing at least one instruction comprising:
displaying a first screen having a width-to-height ratio corresponding to a first ratio on a display (160 of FIG. 1; 360 of FIG. 3) included in an electronic device (101 of FIG. 1; 301 of FIG. 3), the first screen including at least one handwriting input of a first type and at least one handwriting input of a second type;
identifying a command for changing the width-to-height ratio of the first screen from the first ratio to a second ratio; and
based on the command, displaying a second screen obtained by changing the width-to-height ratio of the first screen to the second ratio, wherein the width-to-height ratio of the at least one handwriting input of the first type included in the second screen is maintained such that the width-to-height ratio of the at least one handwriting input of the first type included in the second screen is same as the width-to-height ratio of the at least one handwriting input of the first type included in the first screen, and the width-to-height ratio of the at least one handwriting input of the second type included in the second screen is changed based on the second ratio.
